(19) Europäisches Patentamt

European Patent Office

Office européen des brevets

(11) **EP 1 630 578 A2**

(12) **EUROPEAN PATENT APPLICATION**

(43) Date of publication:
01.03.2006 Bulletin 2006/09

(51) Int Cl.:
*G02B 6/42* (2006.01)

(21) Application number: 05447192.5

(22) Date of filing: 25.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 14.02.2005 EP 05447027
26.08.2004 US 605241 P

(71) Applicants:
• Interuniversitair Microelektronica Centrum
3001 Leuven (BE)
• UNIVERSITEIT GENT
9000 Gent (BE)

(72) Inventors:
• Baets, Roeland
9800 Deinze (BE)
• Bockstaele, Ronny
9820 Merelbeke (BE)
• Naessens, Kris
9090 Melle (BE)
• Rits, Olivier
9000 Gent (BE)

(74) Representative: Bird, William Edward et al
Bird Goen & Co.,
Klein Dalenstraat 42A
3020 Winksele (BE)

(54) **Method for providing an optical interface with an optical coupling structure for a packaged optical device and devices according to such a method**

(57) The present invention relates to a method for providing an optical interface with at least one optical coupling structure (152), such as for example wave-guides and/or microlenses, for a packaged optical device. The device comprises an external alignment structure (156), having a support means (158) with at least one hole (160) and at least one alignment feature (162). An encapsulation is then provided, by providing at least optical encapsulating material (154) into the hole (160) of the support means (158). Optical coupling structures (152) such as wave guides or microlenses may be provided into said encapsulation (153) at a well-defined position relative to said at least one alignment feature (162) of said external alignment structure (156). In this way, by providing the optical coupling structures directly in the material comprised in the encapsulation (153), a high degree of alignment accuracy is obtained.

Fig. 32

**Description**

**Technical field of the invention**

The present invention relates to the field of optoelectronics and optical interconnects for optoelectronics. More specifically it relates to method and apparatus for the packaging of optoelectronic modules.

**Background of the invention**

An optoelectronic module typically comprises one or more optoelectronic components such as for example light emitting diodes (LEDs), lasers, detectors, optical modulators and one or more electronic chips such as for example in CMOS, BiCMOS, GaAs or any other technology, for the realisation of integrated circuits. At least one of these electronic chips is connected electronically to at least one of the optoelectronic components, e.g. by wire bonding, by flip-chipping or by any other suitable technique for achieving electrical connection. Typically on an optoelectronic module, besides an electrical connection, an optical interface is provided, thus providing the interface from the optoelectronic module to an external optical system. This external optical system can be a connector with optical fibres, but also an optical sensing system or light emitting system. Optoelectronic modules need to be packaged and an optical interface, for connecting to an external optical system, has to be foreseen in such packages, such that the optical signal to be obtained or received can be coupled out. The optical interface fulfils two functions. First, it facilitates a precision alignment from the optoelectronic module to the external optical system, with accuracy typically in the order of 1 to 10 $\mu$m, depending on the application. For example, for multi-mode systems, this accuracy is typically of the order of 10 $\mu$m, for single-mode systems in the order of 1 $\mu$m. Such accuracy is typically required, for example, in parallel optical interconnect systems. This precision alignment is achieved by using external alignment feature structures, such as alignment pins, as e.g. described in US-2003/0219217, or ferrule accepting reference holes, as e.g. described in US-2003/0136968. A second function of the optical interface is to facilitate a good guiding of the light to/from the external optical system. This requires optical elements, such as lenses or wave-guides, which are integrated in the external alignment structure.

An optical packaging is employed to assemble the optical elements and the external alignment feature structure on the optoelectronic package with the desired accuracy. For example, micro lens arrays can be positioned in the package, as described in US-6,736,553, or wave guides can be positioned in the package, as e.g. described in US-6,674,948 and US-6,722,788. In prior art, the assembly of the package uses alignment features on the optoelectronic module as well as on the optical element and on the external alignment feature structure. When packaging, it is thus desirable that the optical element includes alignment features to assure a good positioning of the optical element on the optoelectronic package. This is not a simple task, as the fabrication of the optical elements and the fabrication of alignment features on these optical elements typically use different technologies. Whereas the alignment features typically are made using thin-film techniques, the optical components typically are made using other techniques such as etching or moulding. The use of these different techniques for fabricating the alignment features and the optical components usually results in some amount of misalignment.

In the assembly phase, the optical element is positioned on the optoelectronic modules, again resulting in some misalignment, as well as longer fabrication times and a decreased yield. It is to be noted that in optoelectronic modules, not only the X and Y position, but also the vertical distance, i.e. the Z-alignment, between two objects determines the coupling efficiency. To achieve good Z-alignment, precision mechanical elements such as spacers are employed to define the height position of two objects. This is expensive, involves additional handling and is dependent on the availability of high-precision mechanical parts with the desired accuracy.

In light-emitting diode (LED) packages and similar products, lenses are moulded directly in the package, omitting the need for an intermediate optical element. In the same moulding step, the alignment features to the external optical system could be defined (for example, to accept the ferrule of the connector). However, such directly moulded optical structures on the optoelectronic module in general cannot produce accuracy better than 10 $\mu$m. Furthermore, this technique is limited to lenses only, and does not allow to make waveguides. The moulding process employs high-pressure and temperature to achieve good optical quality of the moulded structure, which may not be compatible with the underlying optoelectronic module, and the non-recoverable expenses are relatively high, as e.g. designing the mould is an iterative and expensive process. Finally, this technique is not flexible, as it does not allow integrating the external alignment features in the package during moulding. Furthermore, each design employs a new mould.

Most techniques used for fabrication of refractive micro-optical components are based on well-known processes coming from microelectronics, e.g. standard lithographic techniques combined with a thermal reflow process and — if desired - pattern transfer to the substrate, e.g. by dry etching, or lithography using half-tone, e.g. greyscale, masks and etching. Other, direct-write techniques are laser writing - e.g. with a focused HeCd laser —, e-beam or focused ion-beam writing, diamond turning and micro-jet printing to name a few. Replication of these structures in large quantities typically is achieved by injection moulding, embossing or casting. Another technique more recently introduced as a feasible fabrication technology, is laser ablation. This technique differs significantly from 'laser writing' mentioned above. In the first place, laser ablation does not require resist development as the material is physically removed during ablation. Secondly, while laser writing with a HeCd laser is limited to resists of merely a few microns thick, laser ablation allows machining of surfaces up to several hundreds of microns deep. Finally it should be noted that pulsed laser ablation - in particular when an excimer or $CO_2$ laser source is employed - involves a beam size which is much larger than the focused submicron spot of a continuous laser writing device, and typically amounts to several tens of microns or larger. Laser ablation offers some advantages with respect to the previously mentioned fabrication techniques mentioned as it has a direct-write and contactless etching nature and it has the potential to define microstructures and microoptics on a top surface of a heterogeneous optoelectronic module in a very late phase of the assembly process. Several techniques using laser ablation - in particular excimer laser ablation - for microoptics fabrication have been reported. In general these techniques suffer from a variety of disadvantages, making laser ablation less attractive as prototyping technology. In Appl. Opt. **36** (1997) p.4660, Wang et al. suggest the employment of complex mask patterns for fresnel lens fabrication, a method that is little cost-effective when lenses with different focal lengths, diameters or shapes need to be fabricated since every other lens requires different mask patterns. The application of greyscale masks, as suggested by Matz et al. in Appl. Phys. A **65** (1997) p.349, suffers from the same disadvantage. Mihailov and Lazare report in Appl. Opt. **32** (1993) p.6211 on the ablation of islands in a polymer substrate, followed by thermal reflow. Although the ablation process can be performed within seconds, reflow of the surface typically takes a few hours, making the technique less suitable for fast prototyping. Another approach is based on irradiation of the polymer with UV, i.e. wherein no actual ablation is involved, and swelling of the irradiated zone due to diffusion of Styrene in a controlled way. Again, this last process step requires several hours to finish the microlenses. A similar process is based on irradiation of doped PMMA at subablative fluence only, as described by Beinhorn et al. in Appl. Phys. A **68** (1999) p.709, where spontaneous swelling is the result of a balanced combination of photochemical reactions and surface tension, which means that the process is likely to be very material, dopant and fluence sensitive. Other work involves the use of scanning excimer laser ablation for correction of phase aberrations of glass lenses by ablation of a thin resin coating on the lens. However, experimental results report only on maximum ablation depths up to 5 $\mu$m. Examples with $CO_2$ laser heating are also reported.

The use of connectors as external optical systems, for example in parallel optical interconnect systems, employs a flat optical interface to allow for a good physical contact between the connector and the optoelectronic module. Standard moulding techniques cannot achieve the desired level of flatness, which can be, for instance, 0.1, 0.2, 0.5, 1 or 2 $\mu$m. Precision moulding of micro lenses is shown in US-6,597,020. These techniques allow producing optical elements and are suitable for producing the optical elements that could be assembled onto the optoelectronic module in a later step. In US-6,722,788 the problem of coupling light from/to an optoelectronic device in a package is described. The capability of out/in coupling of light is provided for by a complex system of connectors and couplers which carry optical fibres, and which couple the fibre through the package towards the optoelectronic component, such that they are well aligned with respect to the underlying optoelectronic component. A series of fibres is bundled in a fibre bundle array connector. A coupler holder piece, into which a light collimating or imaging coupler can fit, is fixed to a module connector, which is the latching piece that usually will sit permanently on the module, and onto which also a fibre bundle array connector can fit. A fibre bundle array connector is then inserted into the module connector piece / coupler holder combination. Light is shone through the fibre bundle far end so that light emits from the fibre array connector end. This light can be used for alignment purposes. The collimated coupler is inserted into the coupler holder and aligned so that the critical optical elements of the collimated coupler are aligned to the individual fibres in the fibre bundle/bundle array connector. Once the two pieces are aligned, the collimated coupler is permanently fixed in place in the coupler holder. This assures that any time the fibre bundle array is removed from and reconnected to the module connector that the individual fibres will still be aligned relative to the collimated coupler. The assembly containing the collimated coupler, the coupler holder and the module connector is then aligned relative to the chip assembly so that all of the optical elements in the collimated coupler are aligned relative to all of the optical devices in the chip assembly. This assures that efficient transfer of light between the optical devices and the collimated coupler occurs. The assembly containing the collimated coupler, the coupler holder and the module connector is then brought into close proximity to the chip assembly and permanently affixed in place. This seals the optical devices, ensures that the alignment between the optical devices and the collimated coupler is maintained and ensures that the spacing between the optical devices and the collimated coupler is small enough so that cross talk does not take place. This technique is very complex, expensive, and has a lot of reliability problems.

There is a need for a technique of packaging optoelectronic modules with a simple manufacturing, as obtained with directly moulding of lenses on the optoelectronics thus omitting the need for different alignment steps, but with a better accuracy and better process compatibility with the underlying optoelectronic module.

## Summary of the invention

It is an object of the present invention to provide an improved method for providing an optical interface to a packaged optical or optoelectronic module and to provide devices comprising such an optical interface. It is also an object of the present invention to provide a method for producing an optical element such as a micro lens in a polymer material which is part of an optical module and to provide devices thus produced. An advantage of the present invention is to provide a method for forming an optical interface to a packaged optical or optoelectronic module and to provide devices comprising such an optical interface having a high alignment accuracy. It is furthermore an advantage of the present invention to provide a method for controlled positioning and bonding an external alignment structure on a module with a high alignment accuracy and to provide devices thus obtained.

The above objectives and advantages are accomplished by a method and device according to the present invention.

The invention relates to a method for providing an optical interface comprising at least one optical coupling structure(s), the method comprising:

- providing an external alignment structure comprising a support means with at least one hole and at least one alignment feature,
- after providing said at least one hole (160), providing an encapsulation comprising at least an optical encapsulating material into said at least one hole, and
- after providing the encapsulation, forming at least one optical coupling structure in said encapsulation, said forming being at a well-defined position relative to said at least one alignment feature of said external alignment structure.

Forming optical coupling structure(s) in said encapsulation may comprise direct writing optical coupling structure(s) into said encapsulation. The latter results in a surprisingly good accuracy. Forming optical coupling structures in said encapsulation may also comprise producing optical coupling structures in said optical encapsulating material. An optical coupling structure may be e.g. a lens, a flat surface or a mirror.

The method furthermore may comprise, prior to producing said at least one optical coupling structure in said encapsulation, flattening an external surface of said optical encapsulating material, thereby creating an optically substantially flat external surface of said encapsulation. Said optically flat external surface may be created at a well-defined position relative to the support means, e.g. support plate.

The external surface of the encapsulation may be aligned with an external surface of said support means. Said external surface of the optical encapsulating material may be positioned in the same plane as the external surface of said support means.

Said external surface of the encapsulation may be outside a plane determined by the external surface of the support means.

Said optical coupling structure(s) may comprise micro lenses, formed on an external surface of said encapsulation. Said external surface of said encapsulation may be an external surface of said optical encapsulating material.

Flattening the external surface of said optical encapsulating material may comprise providing a flattening layer on the external surface of said optical encapsulating material, and curing of the optical encapsulating material underneath the flattening layer. Said flattening layer, e.g. polymer layer, may be part of said encapsulation. Said optical coupling structure(s) may be provided in said flattening, e.g. polymer, layer. The flattening layer, e.g. polymer layer, may be replaced by an alternative layer, e.g. a second polymer layer, thus being part of the encapsulate. Said optical coupling structure(s) may be provided in said alternative layer, e.g. polymer layer.

Alternatively, flattening the external surface of said optical encapsulating material may comprise providing a flattening layer on a stamp, pressing said flattening layer on the external surface of the optical encapsulating material by means of said stamp, curing said optical encapsulating material underneath said flattening layer, and removing said stamp. The step of removing the stamp may also remove the flattening layer. Alternatively, the step of removing the stamp may leave the flattening layer attached to the cured optical encapsulating material, as part of the encapsulation.

Said curing step may comprise different sub-steps.

Said flattening may comprise at least one radiation, e.g. UV, curing step.

A mask may be used to pattern said at least one radiation, e.g. UV, curing step. Said stamp may be such that it forms said mask.

Said optical coupling structures may be wave-guides formed through said encapsulation. Said wave-guides may be formed through said optical encapsulating material. Said wave-guides may be formed through said flattening layer, e.g. polymer layer. Said wave-guides may be formed through said alternative layer, e.g. polymer layer. Said wave-guides may be ordered into an array configuration.

Said hole may comprise an optical element. Said support means may comprise alignment features on both sides of said hole.

Said providing an external alignment structure may comprise positioning an external alignment feature on a support means of a device comprising at least one optoelectronic component, whereby providing an encapsulation bridges a gap between the optical interface to be provided and the at least one optoelectronic component on said device.

The optical coupling structures may abut onto said at least one optoelectronic component.

Producing at least one optical coupling structure may comprise ablating at least one optical coupling structure into said encapsulation. Said optical coupling structures may be ablated into said optical encapsulating material, into said flattening layer, e.g. polymer layer, and/or into said alternative layer, e.g. second polymer layer.

It is an advantage of at least some embodiments of the present invention that it combines fast processing with a sufficient machining accuracy and with compatibility with heterogeneous assembly processing. With heterogeneous assembly processing there may be meant that e.g. the alignment features are not constructed with the same technique as the optical outcoupling structures.

The invention also relates to an optical module, the optical module comprising a cavity, an external alignment structure based on a support means, comprising at least one hole providing an entrance to said cavity and comprising at least one alignment feature extending outwards from a surface of the support means, said optical module furthermore comprising an encapsulation comprising at least optical encapsulating material inside said cavity, said encapsulation extending into said at least one hole, wherein said encapsulation comprises at least one optical coupling structure directly written and aligned with said at least one external alignment feature. Said at least one optical coupling structure may be a flat external surface or at least one micro lens directly written in an external surface of said encapsulation.

Said module furthermore may comprise at least one optoelectronic component provided in said cavity, an interposer providing an interface between at least said at least one optoelectronic component and a printed circuit board, a surrounding support structure, which is surrounding said at least one optoelectronic component, a cured adhesive in between said external alignment structure and said surrounding support structure, wherein said interposer, said surrounding support structure, said cured adhesive and said external alignment structure form said cavity, said cavity being closed except for said at least one hole and wherein said optical encapsulating material extends onto said at least one optoelectronic component.

Said optical encapsulating material may be a curable polymer. Said at least one optical coupling structure in said encapsulation may comprise optical wave-guides. Said optical wave-guides may be positioned perpendicularly on the surface of said interposer. Said optical wave-guides may be self written wave guides.

Said optical wave-guides may be holes in the encapsulation filled with a filing material, such as e.g. polymer material, different from said optical encapsulating material.

Said at least one optical coupling structure in said encapsulation may comprise at least one micro lens fabricated by means of laser ablation. Said optical wave-guides may be coupled to optical ports of an optical component.

The invention also relates to a method for producing at least one optical coupling structure, e.g. micro lens, flat surface or mirror, in a material suitable for laser ablation, e.g. polymer material, at a controlled location, comprising providing a layer of material suitable for laser ablation, laser ablating said material suitable for laser ablation such that at least one optical coupling structure, e.g. micro lens, flat surface or mirror is formed, wherein said material suitable for laser ablation is part of a package of an optical module. Said material suitable for laser ablation may be any of a polymer material, a glass or glass-like material, quartz, metals or a ceramic. Polymer material is preferably especially suited for laser ablation.

The method furthermore may comprise curing the material suitable for laser ablation.

Said material suitable for laser ablation may be part of an optical encapsulating material or a polymer layer of said package of an optical module. Said at least one optical coupling structure, e.g. micro lens, flat surface or mirror, may be buried. Said at least one optical coupling structure, e.g. micro lens, flat surface or mirror, may be ablated on top of active components of a package of an optical module. The latter avoids the need for aligning afterwards. The material suitable for laser ablation may provide mechanical and/or thermal protection of underlying components. The ablated optical coupling structure, e.g. lens, flat surface or mirror, may be buried at a predetermined depth in the encapsulant. The predetermined depth may be optimized in an active manner or based on the measured coordinates with the alignment technique.

The method may comprise, prior to laser ablating said material suitable for laser ablation, flattening the surface of the polymer material. The method furthermore may comprise reflowing a surface of said at least one optical coupling structure, e.g. micro lens, flat surface or mirror. Said reflowing a surface of said at least one optical coupling structure, e.g. micro lens, flat surface or mirror may be performed by applying an extra laser ablation pulse. Said at least one optical coupling structure, e.g. micro lens may be a plurality of micro lenses, arranged in an array configuration. The use of an array of microlenses includes display systems such as LED or OLED displays with a microlens or microlenses above each pixel element of the display.

The invention also relates to a method for controlled positioning and bonding of an external alignment structure on a module, said module comprising a supporting means with a supporting surface area and comprising module alignment reference features, said external alignment structure comprising external alignment structure reference features, the method comprising providing an adhesive on said module or on said external alignment structure, measuring the position of the alignment reference features of the module and the position of the external alignment reference features, deriving the relative position between said module and said external alignment structure, bringing the external alignment structure and the module towards each other into a requested relative position, and curing said adhesive.

Providing an adhesive on said module or on said external alignment structure may comprise providing an adhesive at at least part of the supporting surface area or at at least part of the external alignment structure reference features. The method furthermore may comprise providing an encapsulant on top of opto-electronic components of said module. The encapsulant may be a transparent encapsulant.

The method furthermore may comprise, prior to said bringing the device and module towards each other into a requested relative position (x,y,z), providing a requested relative position (x,y,z). The method furthermore may comprise, deriving a difference between the relative position between said module and said device and said requested relative position.

The module may comprise an optical component, the supporting means comprises an optical interface comprising optical coupling structures and the requested relative position may be such that the optical coupling structures are aligned with said optical component.

It is an advantage of the present invention that a method is provided for providing an optical interface with optical coupling structures having a high degree of compatibility with the optoelectronic module.

It is also an advantage of the present invention that methods are provided for creating an optical interface immediately incorporated in the packaging of the optoelectronic module. It is furthermore an advantage of the present invention that no separately fabricated optical coupling structures need to be made.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 is a schematic representation of a scanning contour ablation system, as can be used in the methods according to embodiments of the present invention.

Fig. 2a is a schematic illustration of the parameters used for calculating the trench profile ablated with scanning contour ablation, as can be used in the methods according to embodiments of the present invention.

Fig. 2b is an illustration of a trench profile obtained with a laser beam having a beam diameter $\phi_{beam} = 100\mu m$, an ablation depth per unit of time k = 5.0 $\mu$m/s, a contour velocity of a stage $v$ = 10 $\mu$m/s and a contour diameter D = 50 $\mu$m (a), 100 $\mu$m (b) and 200 $\mu$m (c) for a scanning contour ablation technique as can be used in the methods according to embodiments of the present invention.

Fig. 3a illustrates a comparison between a calculated profile and a measured cross-section for a structure consisting of 2 trenches with contour diameter D = 20 and 40 $\mu$m, contour velocity $v$ = 50 $\mu$m/s, ablation depth per pulse d = 0.084 $\mu$m, and pulse frequency f = 20Hz obtained with scanning contour ablation, as can be used in the methods according to embodiments of the present invention.

Fig. 3b illustrates a confocal microscopy image of the surface of a structure according to Fig. 3a.

Fig. 4 illustrates the calculated rms deviation of the approximating surface according to the continuous working model as used in the optimisation algorithm, and according to the discrete-pulse approach for several maximum scan velocities, for a laser ablated surface as can be used in the methods according to embodiments of the present invention.

Fig. 5a is a calculated 3D image of a structure created with scanning contour ablation, with a contour velocity of 40—150$\mu$m/s and a diameter range 25—150$\mu$m, as can be used in embodiments according to the present invention.

Fig. 5b is a representation of a measured profile of a structure created with scanning contour ablation, with a contour velocity of 40—150$\mu$m/s and a diameter range 25—150$\mu$m, as can be used in embodiments according to the present invention.

Fig. 6 is a schematic representation of a specific set-up for excimer laser ablation, as can be used in embodiments according to the present invention.

Fig. 7 shows photographs of laser-ablated structures created in different commercial polymer material, ablated using 20 pulses with a fluence of 47 mJ/m$^2$. The commercial polymer material used is PMMA (A), PET (B), polyimide (C) and polycarbonate (D).

Fig. 8 shows the etch depth per pulse versus the laser fluence for ablated polycarbonate using an ArF excimer laser, as can be used in the methods of embodiments according to the present invention.

Figs. 9a and 9b each show a photograph of a microlens having a radius of curvature R = 800 $\mu$m before (a) and after (b) lens smoothing, as can be used in the methods of embodiments according to the present invention.

Fig. 10a shows a spherical microlens fabricated in polycarbonate using scanning contour ablation, according to embodiments of the present invention.

Fig. 10b shows the measured versus calculated focal lengths, averaged over all etch rates.

Fig. 11a to Fig. 11c respectively illustrate a lens profile with a radius of curvature R = 125 $\mu$m (a), a photograph of the lens surface (b), and a SEM photograph of a lens, for an ablated lens, as can be used in the methods of embodiments according to the present invention.

Fig. 12a shows a typical phase distribution of a wave front measured above the lens for a spherical wave front entering an ablated lens from the substrate side, the lens being suitable for use in methods according to embodiments of the present invention.

Fig. 12b shows the non-circular symmetric aberrations due to backlash of the translation stage for a measurement as shown in Fig. 12a.

Fig. 13 shows rms values of wave front aberrations of ablated lenses (a) and their corresponding strehl ratios (b) for different focal lengths, for ablated lenses as can be used for methods according to embodiments of the present invention.

Fig. 14 shows rms values of wave front aberrations averaged over all lenses (a) and rms values of wave front aberrations averaged over all lenses with f-numbers of f/5.0 or higher (b) as a function of the etch rate, for ablated lenses as can be used for methods according to embodiments of the present invention.

Fig. 15 shows rms values of wave front aberrations averaged over all lenses (a) and rms values of wave front aberrations averaged over lenses with f-numbers of f/5.0 or higher (b) as a function of the pulse rate, for ablated lenses as can be used for methods according to embodiments of the present invention.

Fig. 16 shows rms wave front aberrations for several contour sequences (a) and wave front aberrations for a lens (f/0.8) with increasing contour sequence (b) for ablated lenses as can be used for methods according to embodiments of the present invention.

Fig. 17 illustrates rms wave front aberrations for different contour velocity ranges, for ablated lenses as can be used for methods according to embodiments of the present invention.

Fig. 18 illustrates non-spherical and non-convex lens shapes, i.e. a concave lens (a), a parabolic lens (b) a flat topped parabolic lens (c) and a lens array (d), for ablated lenses as can be used for methods according to embodiments of the present invention.

Fig. 19 is a schematic representation of a method for providing an optical interface with optical coupling structures or elements in an optical encapsulating material, wherein the position of the optical coupling structures is controlled, according to a first aspect of the present invention.

Fig. 20 is a schematic representation of a device with an optical interface with optical coupling elements in an optical encapsulating material according to the first aspect of the present invention.

Fig. 21 is a schematic representation of different steps of a method for providing an optical interface according to the first aspect of the present invention.

Fig. 22 is a schematic representation of additional steps to be performed with the method as represented in Fig. 21.

Fig. 23 is a schematic representation of an alternative method for providing an optical interface according to the first aspect of the present invention.

Fig. 24 to Fig. 26 is a schematic representation of alternative steps to be applied in the method as represented in Fig. 23

Fig. 27 is a schematic representation of a further alternative method for providing an optical interface according to the first aspect of the present invention.

Fig. 28 is a schematic representation of a device with integrated micro-optical elements in an encapsulation covered with a covering plate according to the first aspect of the present invention.

Fig. 29 is a schematic representation of a method for producing micro lenses in a polymer material according to a second aspect of the present invention.

Fig. 30 is a schematic representation of a method for controlled positioning and bonding of an external alignment structure on a module according to a third aspect of the present invention.

Fig. 31 shows an exemplary packaged active optoelectronic module according to an embodiment of a fourth aspect of the present invention.

Fig. 32 shows an alternative exemplary packaged active optoelectronic module according to an embodiment of the fourth aspect of the present invention.

Fig. 33 shows an exemplary packaged passive optoelectronic module according to an embodiment of the fourth aspect of the present invention.

Fig. 34 shows an alternative exemplary packaged passive optoelectronic module according to an embodiment of the fourth aspect of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. They are intended to illustrate some aspects and embodiments of the present invention. Not all alternatives and options are shown. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In some embodiments of the present invention, laser ablation, e.g. scanning contour laser ablation can be used to create optical elements, such as e.g. microlenses or specific surfaces in a layer, e.g. mirrors. This technique will first be described in more detail. Hereinafter a theoretical description of the microstructure formation due to scanning contour ablation and how a desired structure for an optical element can be realised by calculation of an optimum contour set, as well as a fabrication process for exemplary optical elements such as e.g. several spherical microlenses, e.g. in polycarbonate, including experimental results of the obtained ablated microlenses are discussed. The laser ablation technique for creating the optical elements and the properties of the obtained optical elements will be described by way of example for microlenses, although the invention is not limited thereto. The technique can e.g. also be used for creating specific surfaces such as e.g. mirrors.

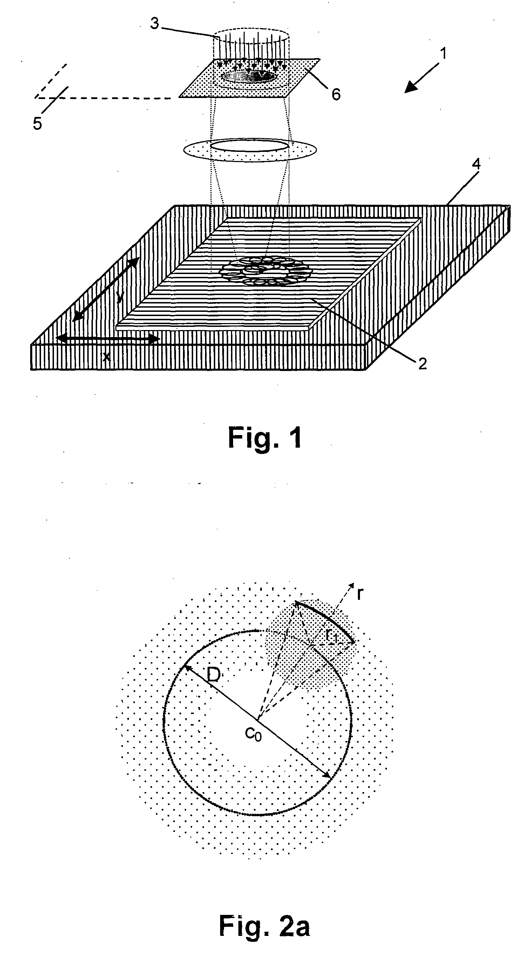

The proposed technique is based on ablating several concentric circular trenches with scanning ablation. A typical set-up 1 is shown in Fig. 1. Each trench is realised by moving the sample 2 along a circular path while the excimer laser is firing laser beam 3 pulses at a constant pulse frequency and fluence. The laser beam 3 has a typical size of 20-500 $\mu$m, scanning the surface of the sample 2, e.g. a polymer surface, along several contours or trenches. Whenever a trench is finished, the laser stops and the stage 4 moves to a new starting position for ablating a next trench. During the contouring of the stage 4, all positions on the sample 2 make a circular movement with the same diameter but with a different centre. The laser beam 3 remains on a fixed position during the process. In the aperture plane 5, the cross-section of the laser beam 3 is determined using a mask 6 with a shaped, e.g. circular, aperture.

For a given diameter of beam 3, each ablated trench is determined by its depth, which is proportional to the number of overlapping pulses, and by its contour diameter that fixes the exact profile of the trench as explained below. In order to derive an analytic expression for the trench depth, it will be assumed that the laser is operating in continuous working (CW) mode. It is assumed that the laser fluence is homogeneous over the entire beam area and consequently the ablated crater has a uniform depth, proportional to the exposure time. This means that the presence of depth variations close to the edge of the crater due to diffraction effects, typically laterally limited to a few $\mu$m from the edges, is neglected. Given the diameter $\phi_{beam}$ of the beam and the diameter of the contour $D$, the contour velocity of the stage $v$ and the ablation depth per unit of time $k$, the profile of a single trench can be written as

$$y(r) = a \, p(r) \qquad\qquad [1]$$

in which

$$a = \frac{\pi D k}{v}$$

$$p(r) = \begin{cases} \dfrac{1}{\pi} a\cos(\dfrac{D^2 + 4r^2 - \phi^2_{beam}}{4rD}) & \text{if} \quad \dfrac{D - \phi_{beam}}{2} < r < \dfrac{D + \phi_{beam}}{2} \\[4mm] 1 & \text{if} \quad \dfrac{\phi_{beam} - D}{2} < r \\[4mm] 0 & \text{if} \quad r < \dfrac{D - \phi_{beam}}{2}, \; r > \dfrac{D + \phi_{beam}}{2} \end{cases}$$

In these expressions $r$ is the radial co-ordinate with the origin being the centre $c_0$ of the trench, as indicated in Fig. 2a, and $p$ can be interpreted as a probability of a location with co-ordinate $r$ to be exposed to the laser beam during one contour movement of the sample stage. In the area which is scanned by the beam during one contour, the material has either been ablated continuously - these locations were always within the beam during the full contour scan - or only during a limited amount of time. In the first case, the probability factor is 1.0 and in the second case a value is assigned which is proportional to the time required for the beam to pass over the location. This probability can be calculated by determining the arc length of a circle with radius $r$ within the beam area, as illustrated in Fig. 2a for a value $r_1$. The factor $a$ represents the full ablation depth for locations with $p$ = 1.0, and is proportional to the full contour scan time.

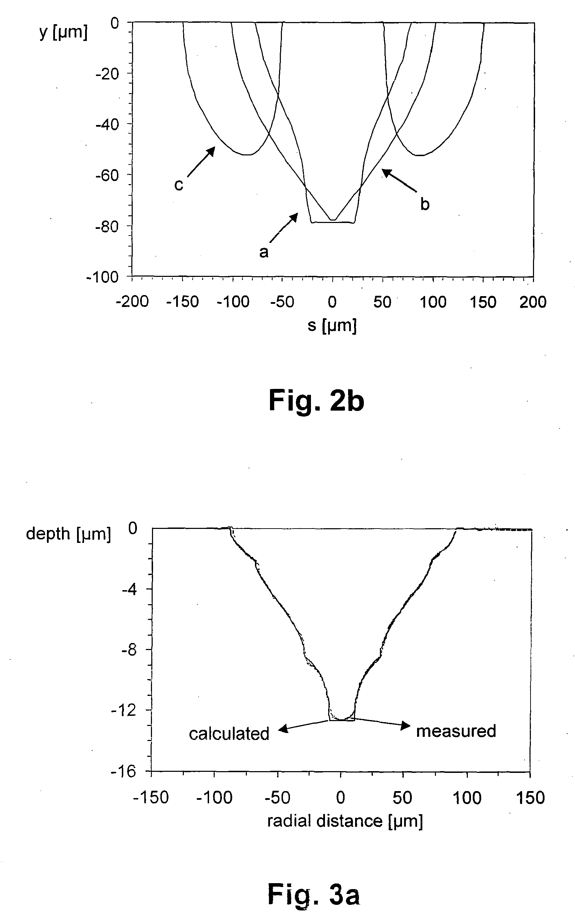

For a typical beam diameter of 100 $\mu$m, an ablation rate of 5.0 $\mu$m/s and a contour velocity of 10 $\mu$m/s of the stage, the resulting profile for $D$ values of 50, 100 and 200 $\mu$m, respectively $D < \phi_{beam}$, $D = \phi_{beam}$ and $D > \phi_{beam}$, is illustrated in Fig. 2b. For a contour diameter smaller than the beam diameter, a flat central part in the trench can be observed. This property will be of particular interest for smoothing purposes in the fabrication process as described in the following sections.

In case a pulsed laser is employed, the ablation depth per unit of time should be replaced by k = $df$ in which $d$ is the ablation depth per pulse and $f$ is the pulse frequency. As a result of the discrete character of the pulsed laser ablation process, the exact trench pattern will deviate from the calculated profile obtained with a CW laser. The validity of the CW approach for pulsed operation is discussed below.

Fig. 3a illustrates a calculated profile, based on equation [1] and a measured cross-section, for an ablated structure consisting of two trenches with different diameters obtained with a pulsed excimer laser. Very good agreement between both theoretical and experimental values can be observed, except for the steep walls around the central part where a slight deviation is noticed due to rounding of the sharp edges by the ablation process. It is to be noted that the second contour is created with D = 40 $\mu$m. Fig. 3b illustrates an image of the surface of this structure obtained using confocal microscopy.

An arbitrary microlens shape can be obtained using a well-considered combination of concentric trenches with profiles as described above. Therefore, an optimisation of the contour diameters and velocities is required. These diameters determine the overlap between the neighbouring trenches and can be chosen to achieve a smooth surface in accordance with the intended microlens shape, which mathematically can be represented by $Y_{desired}$, while the scan velocities determine the overlap of the successive pulses in one trench and consequently also its depth. This optimum set of contours minimises

$$\varepsilon = \int_0^{r\max} \left| Ydesired(r) - \sum_i y_i(r) \right|^n 2\pi r dr \qquad\qquad [2]$$

where $y_i$ is the trench profile for the i-th trench with diameter $D_i$ and velocity $v_i$ mathematically described by equation [1] and n is an integer value (n=1,2 ...).The integral is evaluated over the one-dimensional lens section. Generally the central part of the lens is more important than the periphery; therefore advantage can be taken of introducing a weighing factor in the integral. A range of valid diameters and velocities is determined as follows: contour diameters larger than $\phi_{ens} + \phi_{beam}/2$, wherein $\phi_{lens}$ is the lens diameter, are ignored since they do not overlap anymore with the lens area, and diameter smaller than $D_{min}$ are disregarded as well. This minimum has been introduced to avoid that the sample would be forced to make small contours at elevated speeds, which could cause the stage to stall. However, $D_{min}$ cannot be chosen to be arbitrarily large: typical microlens shapes have a slowly varying central part, meaning that this part will largely be approximated by trenches with $D < \phi$. In the discussed optimisations $D_{min}$ was chosen to equal $0.4\phi$ but other values are not excluded. Concerning the contour velocities: a minimum speed was applied to ensure that a reasonable number of contours are involved. At low speeds, deep and steep trenches are etched and large amounts of polymer material are removed. Intuitively it can be expected that getting a smooth transition with neighbouring, overlapping trenches can be difficult since the ablation process acts differently on sharp edges than on flat surfaces. In addition, part of the ablated material is dropped back onto the nearby polymer surface, potentially blocking future pulses of ablating the covered surface. This effect increases with the amount of material taken away in every trench.

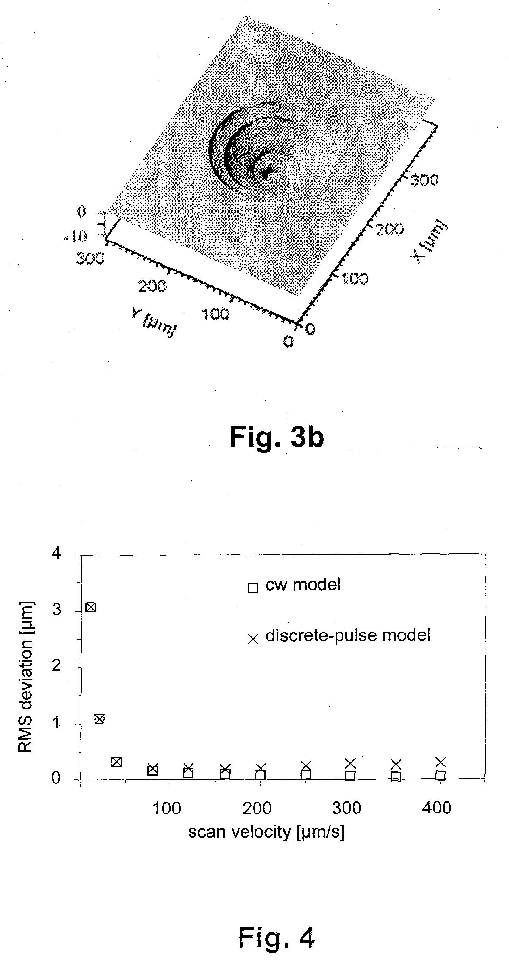

The choice for the maximum scanning speed value should be based on the following considerations: if the trench profiles can be accurately described by equation [1], higher values allow better approximation of the desired profile (lower $\varepsilon$) since the minimum trench depth is lower. In the CW approach, the effect of this parameter can be determined by searching for optimum contour sets with different maximum scan velocities and calculate the rms deviation between the computed approximation and the desired lens profile. This is illustrated in Fig. 4 for a particular lens shape with $f$=250 $\mu$m and $\phi_{lens}$ = 200 $\mu$m. As the contours are assumed to be ablated with a CW laser, the predicted profile is referred to as 'CW approximation'. The deviation between the ideal spherical lens shape and the CW approximation decreases substantially as higher scan speeds are allowed. Other lens dimensions will provide analogous results. A second consideration takes the discrete character of pulsed laser ablation into account: as the scan velocity is increased (while other laser parameters remain constant), less pulses will be fired onto the substrate in a single contour movement and the ablated trench pattern will show substantial deviation from the ideal profile as in Fig. 2. The effect of discrete pulse operation on the resulting lens shape can be calculated numerically, based on the geometry of the ablated cavity due to a single-pulse laser shot. The cavity was modelled as a perfectly circular hole with diameter $\phi_{beam,}$ vertical sidewalls and a homogeneous depth d. The positions of the ablated pits were calculated based on the contour diameter, contour velocity and pulse frequency. In Fig. 4, the results of these calculations are shown for the same lens as mentioned above, but now the true trench pattern was taken into account in order to compute the ablated surface. This approach will be referred to as the 'discrete-pulse approximation'. It is observed that the approximation worsens when contour speeds above 150 $\mu$m/s are present, contrary to what the CW model predicts. Although a simple model for the single-pulse cavity was used, this behaviour was qualitatively observed in our experiments.

An algorithm based on simulated annealing was developed to minimise expression (2). This technique was preferred since it is capable of finding a global optimum and can be easily implemented. It starts with a given set of contours and calculates $\varepsilon$ via (2) where the integral was replaced by a discrete sum, taken in sample points along the desired profile. In a next step a new solution is proposed, which corresponds to the former set but a limited number of randomly selected contours have slightly—and again randomly—changed velocities and/or diameters.

A new $\varepsilon'$ is calculated and compared with the former value. For $\varepsilon' < \varepsilon$ the proposed solution is accepted while in the case $\varepsilon' > \varepsilon$ acceptance only occurs with a certain probability. This probability decreases with time, eventually terminating the optimisation process. Although the user proposes the initial number of contours, the algorithm can freely change this by suggesting velocities and/or diameters outside the valid range. In this case, the parameter will be given a value just outside its range so the contour can always be recalled by only a slight adjustment of one of its parameters. It should be noted that the desired lens is not limited to spherical surfaces only, but can be any arbitrary circular-symmetric form including parabolic, elliptical and linear profiles.

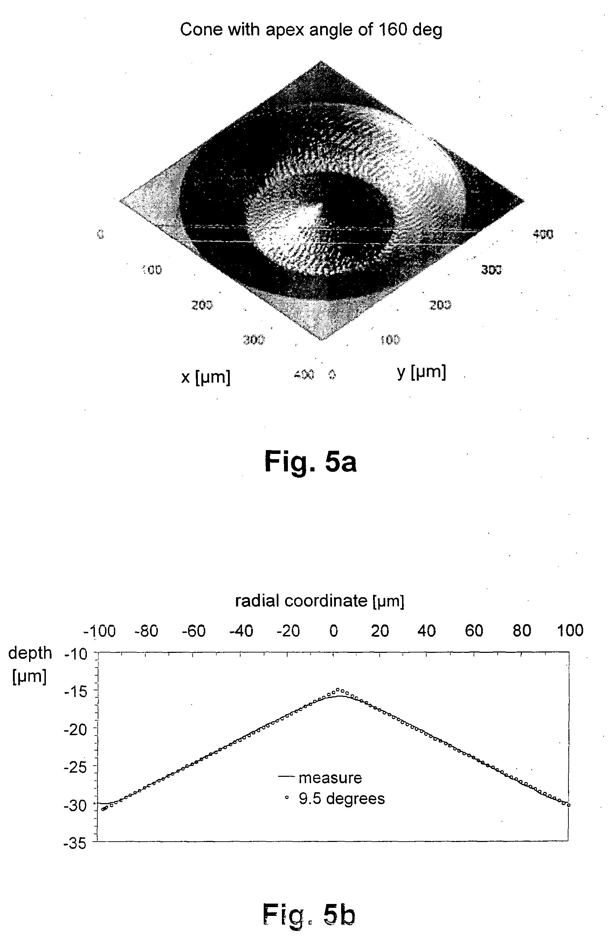

An example of a structure approximated by an optimum set is given in Fig. 5a, illustrating a conical structure with its top buried 5 $\mu$m below the polycarbonate surface. An aperture of 100 $\mu$m was used and 19 contours were required to ablate the full structure. The contour velocity was in the range 40— 150$\mu$m/s and the diameter was in the range 25—150$\mu$m. The laser was operated at 20 Hz, taking away a layer of 70 nm per pulse. The time required to ablate the cone was slightly more than 3 minutes. The 3D surface image is calculated based on the fabrication parameters while the profile was measured with confocal microscopy. Observation of the profile revealed a wall angle of 9.5°, very close to the design value of 10°. Fig. 5a shows a calculated 3D image of a structure created with scanning contour ablation, while Fig. 5b is a representation of a measured profile of a structure created with scanning contour ablation. As $Y(r)$ is approximated by addition of grooves and since the latter satisfy the expression $p^\alpha(\alpha r) = \alpha p(r)$ with $p^\alpha(r)$ the groove profile for $\phi_{beam} = \alpha\phi_{beam}$ and $D = \alpha D$, this property is also valid for the final lens shape. For a spherical convex lens shape for example, this means that the optimum set for a radius of curvature R and diameter $\phi_{lens}$, can also be used for a lens with diameter $\alpha\phi_{lens}$ and curvature $\alpha R$ by multiplying all contour diameters with $\alpha\mu$.

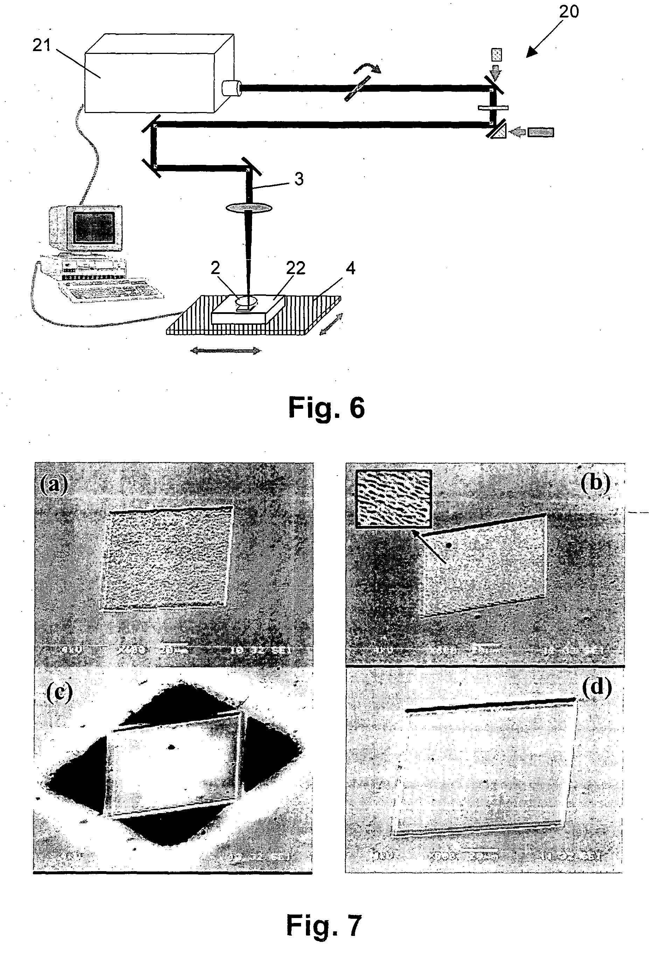

By way of example, a specific set-up 20 for lens fabrication is illustrated in Fig. 6. In this example, an ArF laser 21 is used, being a Lumonics PulseMaster 848 and beam manipulation is handled by Optec's Micromaster. The sample 2 is put in a chamber 22 in which the ambient pressure is dropped below 100 mbar while a small flow of helium above the sample removes the ablation fumes so they cannot contaminate the UV-window, as this would lead to damage by the laser heating. Both chamber connections, i.e. a vacuum pump and a helium inlet, are not shown in Fig. 6. The low ambient pressure considerably reduces debris deposition around the ablated area, as discussed by Berden et al. in Proc. SPIE 4274 (2001) p.411. In order to select a homogeneous part of the laser beam, a 2 $\mu$m thick film of BCB (benzo-cyclo buthene) on a Si substrate is ablated with multiple pulses. A suitable, homogeneous part of the beam is selected when the film is etched away simultaneously over the entire aperture area since the spin-coated film is highly uniform. The removal of the entire film can easily be observed via the TTL (through-the-lens) camera of the micromachining system.

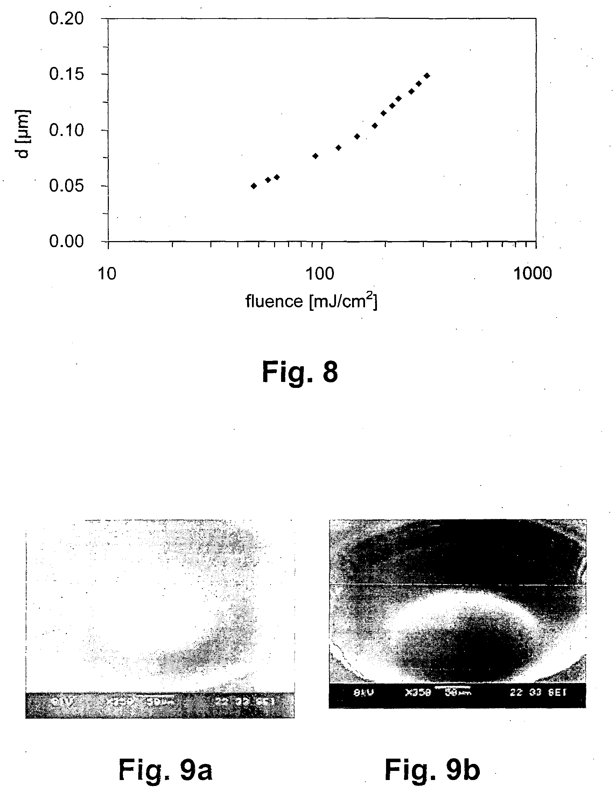

A number of optically transparent and high quality commercial polymers can be used for microoptics fabrication: polycarbonate, polyimide (Kapton), PMMA and PET. These polymers were tested on their suitability for micro-machining with excimer lasers, and photographs of the created structures are shown in Fig. 7. PMMA was found to show incubation effects, i.e. ablation only starts after a few pulses for low fluences, meaning that the ablated depth is not unambiguously determined by the pulse count, and a rather rough machined surface is obtained, as can be seen in Fig. 7 (A). PET develops a particular structure, i.e. an oriented rippled surface, on the bottom of the ablated area, as can be seen in Fig. 7 (B), which makes it unsuitable for optics. Polyimide, commercially available as Kapton, produces a lot of debris during ablation, as can be seen in Fig. 7 (C) and its yellow colour makes it less attractive for optical purposes. Polycarbonate does not show any incubation, even at fluences close to the threshold for ablation, as can be seen from Fig. 7 (D). The ablated surface is very smooth and flat: multiple pulse ablation showed that the rms surface roughness flats out to 1.3% of the ablated depth for static ablation. Since no homogeniser was available in the set-up used to create the structure, it is to be expected that this value still decreases substantially for scanning ablation. Etch depth per pulse versus ArF laser fluence was measured for this material and is given in Fig. 8. Next to its ablative qualities and low water absorption, the optical properties such as little haze, high transmission and a spectral passing band from 360 nm to 1600 nm and the thermal properties, i.e. mainly a high upper working temperature of 115-130 °C, make polycarbonate a very suited candidate as substrate material for microoptics. The polycarbonate samples used were films with a thickness of 500 $\mu$m, obtained from Goodfellow Inc.

Using equations [1] and [2], contour sets for spherical lenses with different focal lengths can be calculated. The obtained results are shown in table I hereinbelow. In this case, the desired lens shape can be defined as:

$$Y_{desired}(r) = -(offset + R - \sqrt{R^2 - r^2})$$

in which the minus-sign clearly indicates that lenses will be buried below the sample surface and *offset* equals the depth of the centre of the lens. For every radius of curvature *R*, the optimisation procedure is reiterated 20 times and the best approximation (minimum $\epsilon$) is selected for fabrication.

**Table 1**

| design *R* ($\mu$m) | lens height ($\mu$m) | # contours | rms deviation* ($\mu$m) |
|---|---|---|---|
| 125 | 50 | 37 | 0.129 |
| 150 | 38 | 30 | 0.130 |
| 175 | 31 | 25 | 0.131 |
| 200 | 27 | 22 | 0.120 |
| 250 | 21 | 20 | 0.118 |
| 300 | 17 | 19 | 0.096 |
| 400 | 13 | 15 | 0.110 |
| 600 | 8 | 13 | 0.113 |
| 800 | 6 | 12 | 0.105 |
| 1000 | 5 | 10 | 0.101 |
| 1500 | 3 | 9 | 0.101 |

optimisation parameters: *v* range: 40-150 $\mu$m/s, *f* = 20 Hz, $\phi$ = 100 $\mu$m, *d* = 0.07 $\mu$m calculated values according to the 1D model

Table 1 summarises the main results of the calculated lens characteristics and optimisation parameters for lenses with radius of curvature $R$ between 125 and 1500 $\mu$m, to be fabricated with an aperture of 100 $\mu$m. The optimisation proceeded in two steps: first the contour velocity is kept fixed at 100 $\mu$m/s while the diameters were optimised. In a second phase both parameters are allowed to vary. However, the starting temperature of the simulated annealing procedure is chosen considerably lower this time and the contour set is fine-tuned. This approach showed to produce very reasonable results in practice with typical calculation times of the order of a few minutes per iteration. The calculated sets were used for making lenses in polycarbonate with a pulsed ArF excimer laser operating at 193 nm. Although the optimisation procedure was based on a range of contour velocities between 40 and 150 $\mu$m/s, this range can be scaled according to the true ablation depth per pulse and desired pulse frequency. Every trench ablation starts at a random place around the centre of the lens and the full contour is scanned twice by the laser at twice the prescribed contour speed. As the set-up lacks an electronic shutter for the laser beam, this approach helps to spatially average out the effects of fluence fluctuations due to the discontinuous laser operation. For clarity reasons, scanning speed values mentioned herein always refer to the single-contour speeds. The fabrication process is performed in two phases: in a first stage, the sample surface is ablated via the scanning contour method, based on the optimum contour sets as described in the previous subsection. The result is a surface with a lot of debris and with a texture in which the individual pulses can be distinguished. In a second phase, optical finish of the lens surface is achieved by ablation of the entire lens area with a large beam aperture. During this process the sample is contouring with a small diameter, i.e. typically 20 to 30 $\mu$m. In this way a structure similar to the structure shown in Fig. 2b is ablated on top of the lens with the central flat part at least equalling the lens area. Three distinct effects are achieved in this way: debris is ejected from the lens surface, forced to leave the lens area and deposited near the ablated zone. Secondly, as spatially rapidly varying features ablate faster than smooth surfaces, the surface gradually becomes smoother. It is believed that this smoothing during material removal is due to the presence of a thermal component in the photo-ablation process. Thirdly, as during the surface smoothing a layer of polycarbonate is physically removed, it is important that the large laser beam is as homogeneous as possible in order not to deform the lens shape. Since the set-up used lacks a beam homogeniser, the contouring of the smoothing beam ensures that the laser fluence is spatially averaged over the lens area. During this process, a laser fluence of 140 mJ/cm$^2$ was used, taking away a layer of almost 18 $\mu$m (200 pulses). Drilling the lens structure less deep still left the discrete pulse pattern in the surface. Fig. 9. illustrates the effect of this 'cleaning' procedure: a smooth surface buried in the polymer surface and surrounded by a steep wall is accomplished after smoothing the surface. Debris is deposited close to the smooth area.

**Table 2. Microlens fabrication parameters.**

| design R ($\mu$m) | Measured f ($\mu$m) | f-number[3] | Fabrication time[4] |
|---|---|---|---|
| 125 | 155$\pm$11[1] / 151$\pm$14[2] | 0.8 | 06m03s |
| 150 | 195$\pm$ 11 / 189$\pm$13 | 1.0 | 04m35s |
| 175 | 250$\pm$ 13 / 244$\pm$6 | 1.3 | 03m55s |
| 200 | 317$\pm$ 12 / 309$\pm$6 | 1.7 | 03m19s |
| 250 | 407$\pm$ 14 / 399$\pm$9 | 2.1 | 02m44s |
| 300 | 488$\pm$ 17 / 480$\pm$9 | 2.6 | 02m37s |
| 400 | 678$\pm$ 23 / 666$\pm$11 | 3.6 | 01 m57s |
| 600 | 1023$\pm$36 / 1000$\pm$14 | 5.4 | 01m38s |
| 800 | 1366$\pm$ 57 / 1333$\pm$38 | 7.2 | 01 m24s |
| 1000 | 1770$\pm$ 94 / 1717$\pm$53 | 9.3 | 01m13s |
| 1500 | 2650$\pm$ 125 / 2580$\pm$55 | 13.9 | 0m59s |

fabrication parameters: $f$ = 20 Hz, $\phi$ = 100 $\mu$m, fluence = 50-177 mJ/cm$^2$, $d$=0.051-0.103 $\mu$m

[1]values of $f$ are averages (and standard deviations) over lenses made with 6 different laser fluence levels (50, 62, 78, 101, 134 and 177 mJ/cm$^2$) respectively d equalling 51, 59, 67, 78, 89 and 103 nm.

[2]values of $f$ are averages (and standard deviations) over lenses made with 4 different laser fluence levels (62, 101, 134 and 177 mJ/cm$^2$) respectively $d$ equalling 59, 78, 89 and 103 nm.

[3]focal number calculations are based on the central lens area selected for aberrations measurement, which was set to a diameter of 190 $\mu$m.

[4]based on $d$=0.103 $\mu$m, $f$=20 Hz

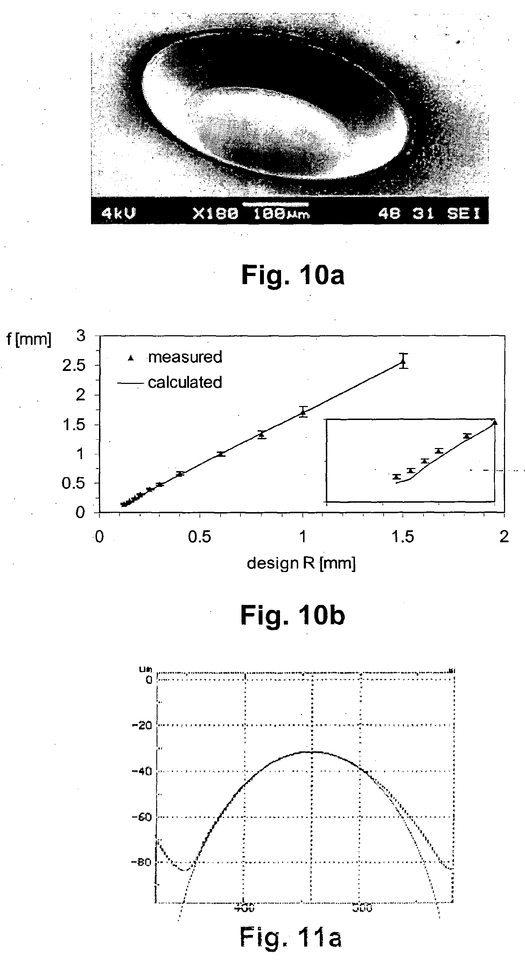

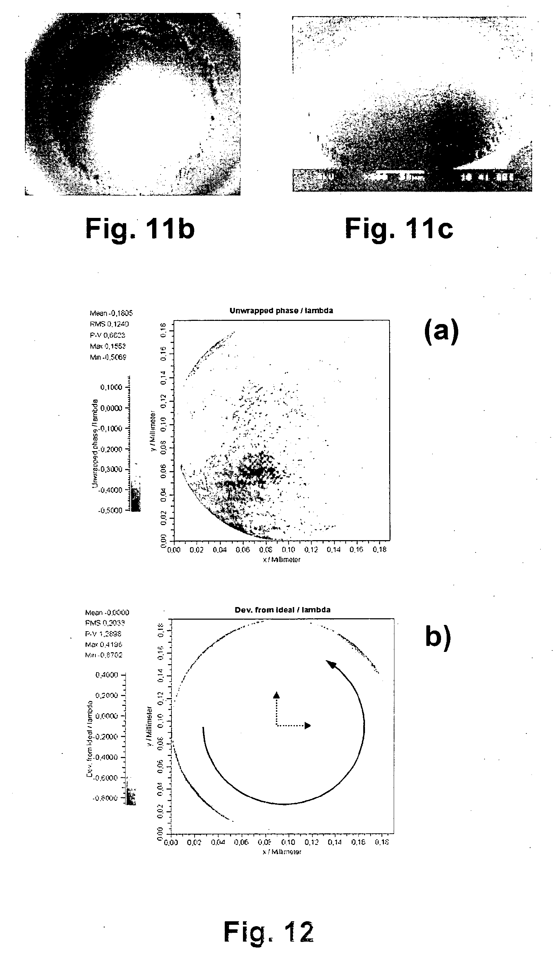

Table 2 gives the required fabrication times for the different lenses and summarises the main properties of the ablated lenses, and in Fig. 10a a SEM picture of one of the fabricated lenses is shown. The focal lengths of the lenses were measured using a fringe count on the lens surface with the interferometer and compared to calculations for spherical lens shapes with the same radius of curvature $R$, Fig. 10b. These calculations were performed by a commercial raytrace tool (ASAP, Breault). As the numerical aperture (NA) of the interferometer objective was limited to 0.4 (20x magnification), a microscope was used to determine the position of the focal spots for the fast lenses (radius of curvature $R$ = 125, 150 and 175 $\mu$m) illuminated with a white-light collimated source. Excellent agreement between measured and calculated focal lengths can be observed for radius of curvature $R$ > 250 $\mu$m, indicating that the fabrication process is quite accurate. Only for the fastest lenses (f/0.8-f/1.3) the predicted values are below the measured values. It is believed that rounding of the rim of the lens by the ablation process is responsible for the longer focal lengths. Due to the high numerical apertures, it was impossible to verify this using optical profilometry. However, with a contact profilometer the lens surface could be measured and compared its profile to a spherical lens shape with radius of curvature $R$ = 125 $\mu$m. The results are shown in Fig. 11a to Fig. 11c, whereby Fig. 11 a is a lens profile for a lens with radius of curvature R = 125 $\mu$m, Fig. 11b illustrates a photograph of the lens surface and Fig. 11c illustrates a SEM photograph of a scanning contour ablated lens. The too slow descending part of the measured profile (right flank) should be ignored since it is equipment-related as verified by rotating the lens e.g. 180 degrees. As can be seen from the left rising flank, the rim of the lens proves to be slightly less steep as expected for a spherical lens, causing the focal point to shift to higher values. Similar observations were made for lenses with radius of curvature $R$ = 150 $\mu$m. The lenses were visually inspected with an optical microscope. All lenses had a smooth surface except the fastest lenses with a radius of curvature R = 125 $\mu$m: an irregular structure was observed at the edge of the lens and small, radially oriented grooves were seen on the surface away from the centre. Although the exact nature of both observations is not entirely clear, it is expected that the irregularities at the lens rim are caused by ablation at the edge of the beam aperture on a steep surface while the grooves are likely due to beam reflection at the crater walls outside the lens area. As the surface becomes smoother when the lens is driven deeper into the surface, the reflection will increase substantially. For higher radius of curvature R, the wall angle is not suited anymore for deflecting the laser beam towards the lens surface.

During characterisation of the lenses, a noticeable difference in the measured focal lengths for the (assumed) etch rates 51 and 67 nm/pulse was observed. The focal lengths versus radius of curvature R exhibit the same linear behaviour, but with a different slope. Excluding the results for these etch rates considerably decreases the standard deviation (Table 2). As the different behaviour for these etch rates cannot be explained based on physical arguments, it is expected that they are caused by a deflection in the fluence level of the laser during their fabrication. As all the fluence and etch rate were determined off-line (i.e. before any of the lenses were made), an inaccurate adjustment in the beam attenuator is likely to be the cause. The questionable etch rates are further excluded from the measurement results.

In order to optically characterise the lenses, Mach-Zehnder interferometry was used for wave front aberration measurement and to a lesser extent optical profilometry and SEM for analysis of the surface profile. As the microlens is buried in a polymer film, the measured wave front aberrations account for the planoconvex lens with the flat polycarbonate interface at one side and the curved microlens surface at the other side. The wave front was evaluated at the exit pupil of the lens for a spherical incident wave front from the focal point at the flat interface side. All measurements have been limited to the central 90% of the lens (diameter of 190 $\mu$m). After the measurement, the wave front is fitted to a Zernike polynom -10th degree to ensure a sufficient fit- in order to calculate the aberrations. The rms values produced by this fit are described in this section. As the interferometer uses a helium-neon laser with $\lambda$ = 632.8 nm, all aberrations values are expressed in this wavelength.

The results of the measurements are summarised below and used for discussion of some important laser parameters in scanning contour ablation. The experiments have been limited to single aperture and lens diameter values. All lenses had a diameter of 200 $\mu$m, a size which is compatible with standard pitches of 250 $\mu$m in VCSEL or LED arrays for telecom purposes. From a fabrication point of view the diameter of the machined surface is of little importance as long as the area fits within the beam used for smoothing the lens surface (which on its turn is limited by the homogeneous part of the laser beam). However, the calculation of the contour set can become more time-consuming as the spatial extent of the lens shape becomes larger and (2) has to be evaluated at more locations. Concerning the aperture diameter it should be noted that with a micro-machining system based on projection optics, nonuniform etching close to the edge of a drilled hole can be observed (diffraction of the beam). This effect tends to become more important as the aperture is decreased and will eventually dominate the surface finish of the hole for small aperture diameters (below 10 $\mu$m). For this reason, a rather large beam size of 100 $\mu$m has been chosen to make the lenses. A smaller aperture also implies a longer fabrication time as the total amount of material removed per pulse decreases. Although the latter scales as $\phi^{-2}_{beam}$, this is not entirely the case for the quantity of useful removed material ablated within the lens area. E.g. a lens with lens diameter $\phi_{lens}$ = 200 $\mu$m, radius of curvature R = 800 $\mu$m and depth of the centre of the lens *offset* = 5 $\mu$m, is fabricated in an ablation system with pulse frequency $f$ = 20 Hz and ablation depth per pulse $d$ = 0.05 $\mu$m in 2 minutes with a 100 $\mu$m aperture (1462 pulses), while a 50 $\mu$m aperture requires 5 minutes (3678 pulses).

Before summarising the main results of the Mach-Zehnder (MZ) interferometric measurements, it is to be emphasised that a number of technological issues also influence the lens quality and thus the aberration measurements: accuracy of the contour movement by the stage which is limited by backlash, finite resolution and vibrations due to resonance effects; pulse-to-pulse fluence variations resulting in ditto etch depth spread; timing-jitter between the stage movement and the laser firing leading to non-equidistant pulses on the sample; non-uniformity of the beam. These issues cause a noticeable spread on the aberration measurement results.

Typical measurement results as produced by the MZ interferometer for the ablated lenses are given in Fig. 12. Particular interest should be focused on the wave aberrations in Fig. 12(b). Similar distributions were measured for a large number of lenses. Since these aberrations are not circular-symmetric, pulse-to-pulse fluence variations and timing-jitter that would occur randomly on the lens surface, and beam non-uniformity can be excluded since the aberration is point-symmetric. The only plausible cause is a considerable amount of backlash in the stage drive on the x-axis, which was confirmed by measured values of more than 4 $\mu$m depending on the exact location of the stage on the x-axis.

Some important lens and process parameters and their influence on the aberrations are further discussed.

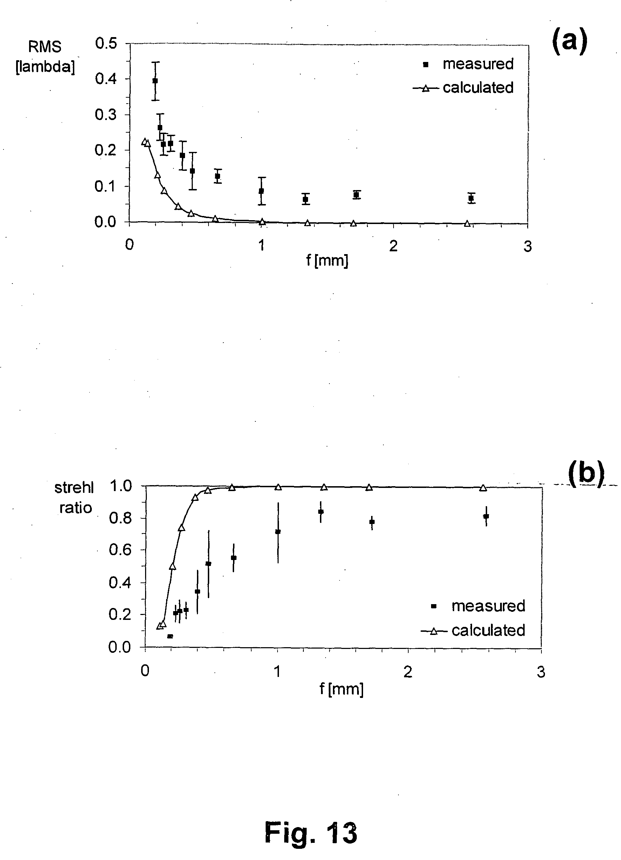

Fig. 13 illustrates the measured rms wave front aberrations and the corresponding strehl ratios of the ablated microlenses (averaged over several etch rates), compared to values calculated by ASAP from Breault Research for ideal spherical lenses. High strehl ratios can be achieved for slow lenses. Peak values were reached for the etch rate of 59 nm/pulse with values up to 0.93 corresponding to rms aberrations below 0.05 $\lambda$.

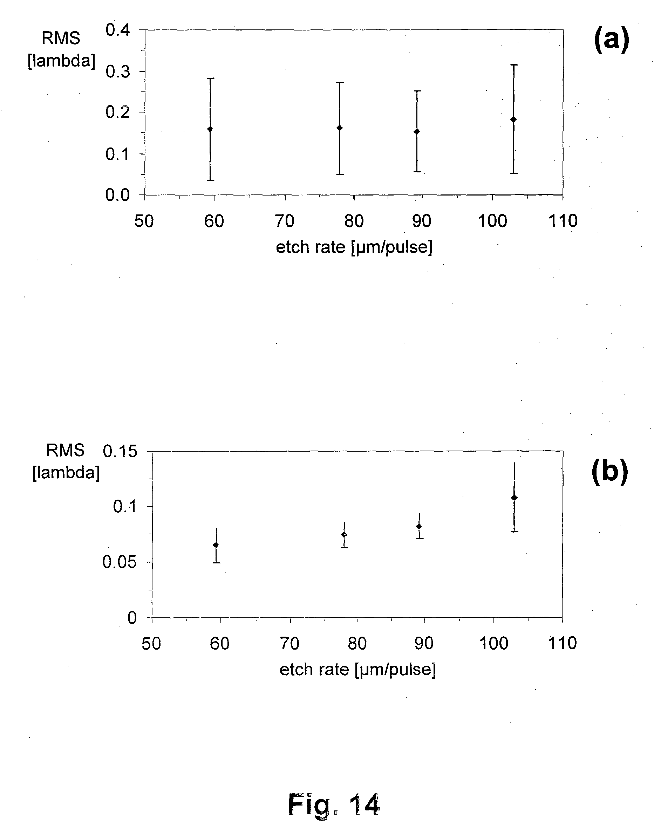

Within the laser fluence measurement range, i.e. about 60 to 180 mJ/cm$^2$, limited by the attenuator range for a demagnification of 5x, etch rates between 59 and 103 nm/pulse could be obtained. In Fig. 14 the results are summarised, averaged over all lenses and lenses with focal numbers of f/5.0 or higher respectively. The latter shows that the aberrations (and their spread) tend to increase as the etch rate is enhanced. This can be intuitively understood as lenses with high f-numbers require little material to be ablated and thus a small number of contours with high corresponding scan velocities. With higher etch rates, the latter will increase even more, resulting in higher surface roughness (as previously indicated in Fig. 4). A second effect is that every pulse has a higher impact on the overall lens shape as more material is being removed per pulse. Thus fluence variations and stage positioning errors become more relevant and this will increase the spread on the aberrations.

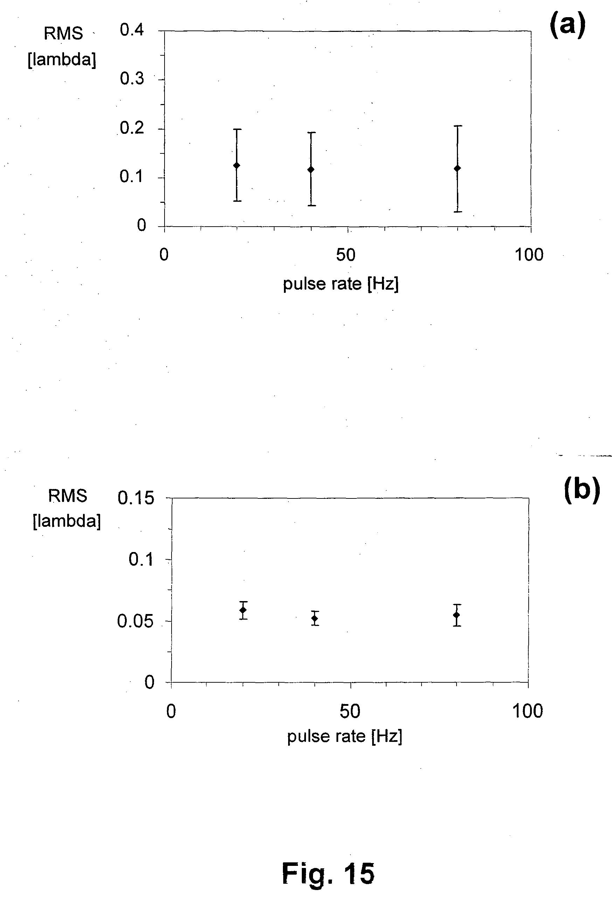

The influence obtainable by adjusting the pulse frequency is particularly interesting since it decreases the fabrication time just like the etch rate, but now the pitch between successive pulses remains constant. As can be seen in Fig. 15, the pulse frequency does not change the surface quality noticeably. It is to be noted that within the applied pulse frequency range, no change in the etch rate can be detected in accordance with previously reported results for polyimide and PMMA, as discussed by Burns and Cain in J. Appl. Phys. 29 (1996) p1349-1355.

Once a lens requires to be ablated, a decision has to be made concerning the sequence of the contours. Three options were investigated: writing the trenches in random order, in order of increasing and of decreasing diameter. From a processing point of view, it is not clear which approach is best. For instance writing the central part of the lens first allows accurate profiling of this area as initially a flat surface free of debris is present and as no steep edges are ablated in this region. However, as the ablation progresses towards the outer region of the lens, a lot of debris is deposited on the central part and requires to be removed. On the other side, the inverse approach first ablates the deeper parts of the lens and gradually moves towards the central part. Although the central part will be initially covered with debris, towards the end of the processing it will become clear again due to ablation in that area. However, the present debris can cause the surface shaping to be less accurate centrally, which in turn degrades the optical functionality.

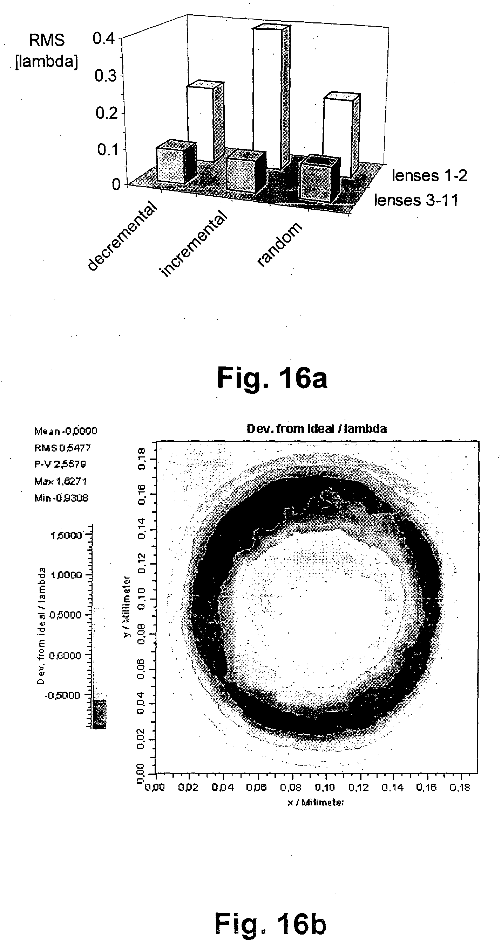

These effects highly depend on the f-number of the lens: high values mean very slowly varying lens profiles requiring little ablation and as a consequence the amount of debris is very limited and no steep edges are to be expected in the surface under ablation. However, for fast lenses there is an entirely different situation (Fig. 16). It appears that writing the lens randomly or from the rim towards the centre is to be preferred to the opposite order.

The similar lens quality for random and decreasing sequence can be understood by the fact that a considerable higher amount of material has to be ablated at the rim of the lens. This means that most contours have large diameters and thus the random sequence case will differ little from a decreasing sequence: a lot of large contours in succession alternated with a small contour from time to time. As can be seen from Fig. 16, part of the aberrations comes also from the centre of the lens in the case of increasing contour sequence, an observation which was not made for the other contour sequences.

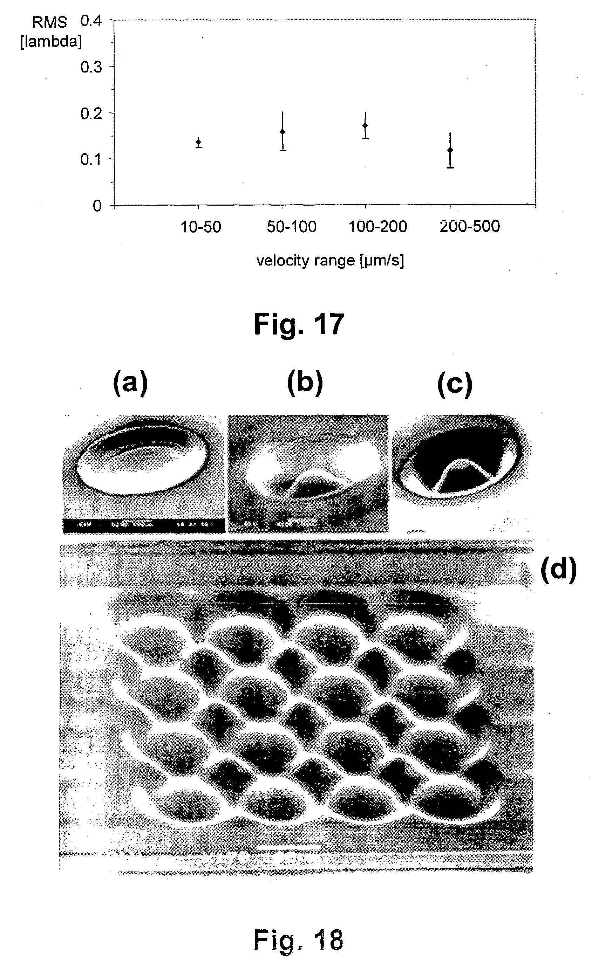

All experimental results referred to hereinabove refer to lenses fabricated with the decreasing contour sequence. In order to check the influence of the volocity range used, an optimum set for a lens with radius of curvature R = 250 $\mu$m was calculated with the single-contour speeds within the following ranges: 10-50, 50-100, 100-200, 200-500 $\mu$m/s. Every lens was fabricated 4 times under similar conditions and the reported results are averaged values. The corresponding results are shown in Fig. 17. Contrary to the case where etch rate, or its equivalence laser fluence, was varied, a different optimum set is calculated for higher scan velocities and etch rate remains constant at 76 nm/pulse. Aberrations do not seem to depend on the chosen scan velocity range — although the spread on the results seems to have increased, which is in accordance with the results in Fig. 4: increasing the scan velocity allows the algorithm to find a contour set which forms a better 1-D fit to the desired lens shape in comparison to lower scan velocities. However, as the distance increases between successive pulses, rms. roughness will increase for a given ablation depth.

Contour scanning ablation allows the fabrication of lenses different from spherical, convex shapes in exactly the same way, such as e.g. non-spherical lenses and lens arrays. In Fig. 18 a few examples are given. Fig. 18a shows a concave lens, Fig. 18b illustrates a parabolic lens and Fig. 18c illustrates a flat topped parabolic lens. If the single aperture is replaced by a 2D array of holes in the mask plane, then it is possible to ablate a lens array in essentially the same time as a single lens. Fig. 18d illustrates a 4x4 lens array with lens diameter 100 $\mu$m, pitch 150 $\mu$m and beam aperture diameter 50 $\mu$m. The fill factor is in this case 35%. If standard pitches of 250 $\mu$m are required, then the maximum achievable fill factor is 28 or 50% for respectively a 100 or 50 $\mu$m aperture if contours diameters ranges are used as described above. It is expected that the surface finish of the individual lenses in the array will be similar to the one lens case. Particular attention will have to be paid to the homogeneity of the laser fluence within the entire array area.

Generally, the present invention allows to obtain packaged optical modules, such as e.g. packaged optoelectronic modules, and methods for producing them, whereby a significantly smaller overall alignment error can be achieved than for prior art packaged optical modules. This is obtained by defining an optical element directly to a packaged optoelectronic module in reference to its alignment features or to the external alignment structures. The optical elements thus are defined directly in reference to at least one alignment feature or to at least one external alignment structure.

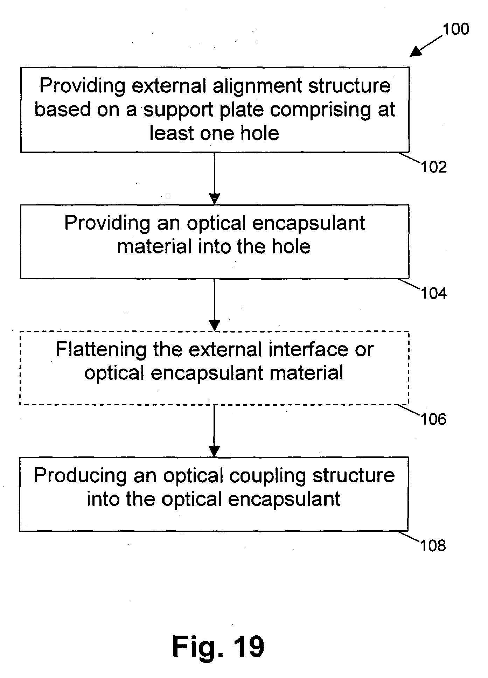

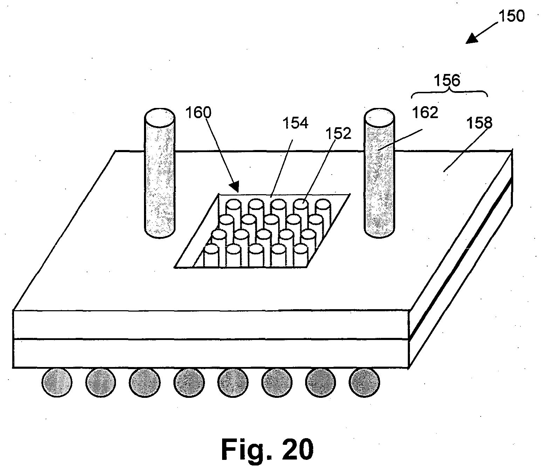

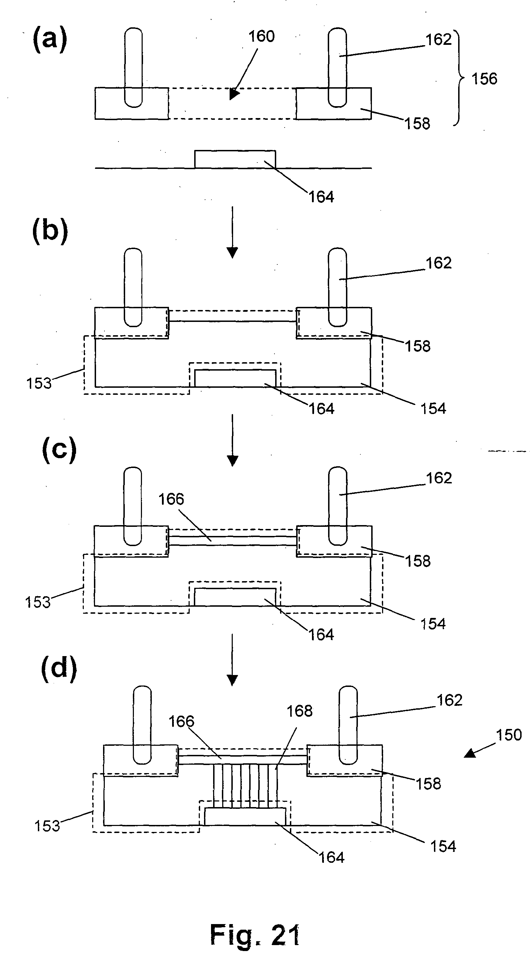

In a first aspect, the invention discloses a method for providing an optical interface with optical coupling structures in an encapsulation, wherein the position of the optical coupling structures is controlled. The different steps of the method 100 for providing an optical interface are shown schematically in Fig. 19. The method will be illustrated by way of example for generation of a device 150 having an optical interface with optical coupling structures 152, which may be e.g. microlenses, mirrors or wave guides, in an encapsulation 153 (as shown e.g. in Fig. 21) comprising at least optical encapsulating material 154, and whereby the position of the optical coupling structures 152 is controlled. Such a device is shown in Fig. 20. In a first step 102 of the method 100, an external alignment structure 156 is provided, based on a support means 158, e.g. a support plate, comprising at least one hole 160, and further comprising external alignment features 162. In a second step 104, an encapsulation 153 is provided comprising at least optical encapsulating material 154 which is provided into the hole 160 of the support means 158, e.g. support plate. A third, optional, step 106 comprises the flattening of the external surface of the optical encapsulating material 154, hereby creating an optically flat external surface of the encapsulation 153. This step is optional, depending on the quality and flatness of the encapsulation 153, i.e. the optical encapsulating material 154, provided in second step 104. In a further step 108, optical coupling structures 152 are produced into the encapsulation 153. The different steps, shown in the flow diagram of Fig. 19, are now discussed in more detail.

The external alignment structure 156, provided in step 102, is based on a support means 158, e.g. support plate. The support means 158, e.g. support plate, can be made of a semiconductor material such as e.g. silicon, a conductive material such as a metal, an insulator such as a ceramic, a polymer or any other material which is self-supporting and which has precision mechanical features, such as, for example, alignment crosses, which are used as reference for the alignment of the support means 158, e.g. support plate, to other parts, for example an optoelectronic package. Furthermore, the material should be compatible with further processing of the device 150 having an optical interface, e.g. optoelectronic module, such as solder reflow, which is typically performed at a temperature around 280°C. The hole or window 160 in the support means 158, e.g. support plate, may have any suitable shape. It can be for instance rectangular or circular, although the invention is not limited thereto. In certain embodiments, the sidewalls of the hole are substantially vertical as compared to the surface of the support means 158, e.g. support plate. Alternatively, the sidewalls may be inclined. The external alignment features 162 may be alignment pins. However, any appropriate alignment technique, and thus any appropriate alignment feature 162, may be employed. For example, the external alignment features 162 may be one or more alignment crosses or alignment holes. The external alignment features 162 can extend outside of or be contained within the bounds of the support means 158, e.g. support plate. This can bring an additional advantage in a later stage by being reusable afterwards for fitting in/on a connector. If the alignment features 162 are alignment pins, they may have any suitable shape in cross-section, e.g. they may be circular, star-shaped or cross-shaped in cross-section. The alignment features 162 may alternatively be an acceptor or complementary hole for a multi fibres ferrule which is flat or has a flat side. The external alignment structure 156 may comprise a combination of different alignment features 162 as described above. The support means 158, e.g. support plate, may furthermore comprise alignment features 162 on one or more sides of the hole 160, e.g. on two opposite sides of the hole 160, such as alignment pins or alignment holes. For example, the combination of at least one alignment cross and one or more alignment pins for which their relative position is exactly known within a small error range may be employed. The positional error should be substantially smaller than a typical alignment error of prior art devices.

The optical encapsulating material 154 may be any optically transparent material which is suitable for sealing optical devices, such as transparent epoxies, acrylates, polyimide or any other suitable polymer material. The flat external interface has an rms flatness that may be controlled by a method according to the present invention. The flatness may be below 0.1, 0.2, 0.5, 1, 2 $\mu$m. In certain embodiments the external surface of the encapsulation 153 is aligned with the external interface of the support means 158, i.e. the encapsulating material 154, or additional material used for flattening the encapsulating material 154 or for providing other properties, is substantially filling the hole 160 in the support means 158, e.g. support plate. In other embodiments the external surface of the encapsulation 153 is below the external interface of the support means 158. Such approaches may be advantageous in embodiments where optical elements, such as e.g. micro lenses, are formed on the external interface of the encapsulation 153. In such embodiments the distance between the external surface of the encapsulation 153 and the external surface of the support means 158, e.g. support plate, provides an extra flexibility, since it can contribute to the optical object and image distances of the optical system, such as e.g. the lens system.

Depending on the flatness of the encapsulation 153 provided in the previous steps, flattening of the optical encapsulating material 154 needs to be performed. A method of flattening the external interface of optical encapsulating material 154 comprises providing a flattening layer 166, e.g. a polymer layer or film, on the external interface of optical encapsulating material 154 or providing a flattening layer, e.g. polymer layer or film, on a stamp, pressing the flattening layer on the external interface of the optical encapsulating material 154 by moving the stamp towards the optical encapsulating material 154, curing of the optical encapsulating material 154 and removing the stamp. The thin flattening layer 166, e.g. polymer layer or film, may be chosen to improve the mechanical properties of the encapsulate (scratch resistance, hardness etc). The flattening layer 166, e.g. polymer layer or film, may be cyclic olefin copolymers and organically modified ceramics for a good quasi hermetical sealing, polycarbonate for scratch resistance and polycarbonate, acrylate, cyclic olefin copolymers, polyimide, polystyrene and organically modified ceramics if laser ablation is to be performed.

In the following, a more detailed description of a stamp technique for applying the flattening layer is provided. The stamp can be made out of glass, and for instance electrostatic forces can be used to temporarily attach the stamp to the flattening layer, e.g. polymer layer or film, for transferring or moving the layer towards the encapsulating material 154. Moving the layer to the external interface may be performed such that substantially no bubbles are captured or formed under the layer or in between the layer and the encapsulating material 154. This may be achieved by bringing the layer very slowly onto the encapsulating material 154, while making a continuous, unimpeded movement e.g. a movement during which mechanical shocks are not encountered. In certain embodiments, the step of removing the stamp also removes the flattening layer 166. The temporary presence of the flattening layer on the encapsulating material 154 nevertheless may have led to a flattening of the surface of the optical encapsulating material 154. In other embodiments, the step of removing the stamp leaves the flattening layer, e.g. polymer layer or film, attached to the cured optical encapsulating material 154. The flattening layer thus becomes part of the encapsulation 153. In certain embodiments the stamp is such that it forms a mask, e.g., it functions as a mask because of its physical structure.

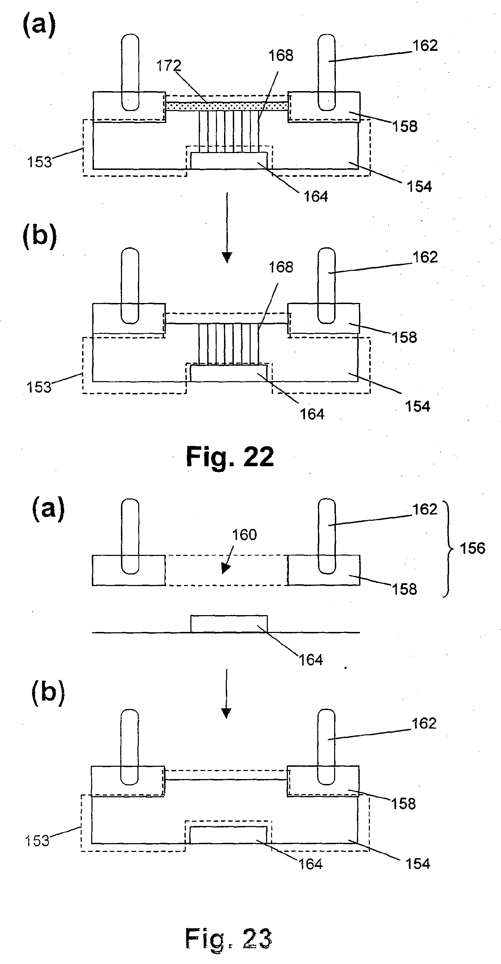

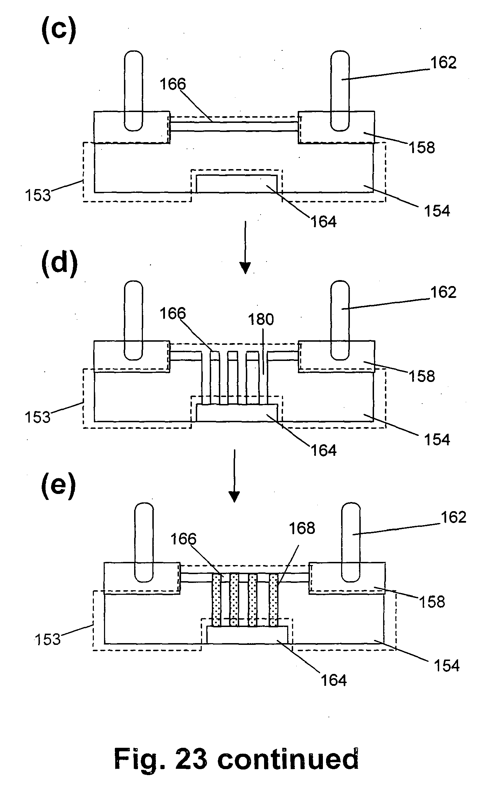

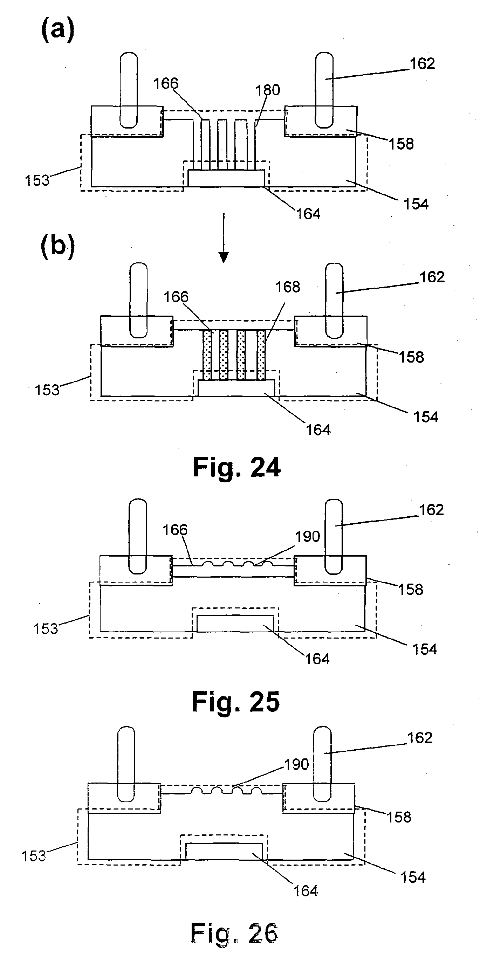

The curing step for curing the optical encapsulating material 154 can comprise different sub-steps. It can for instance comprise at least one ultraviolet (UV) curing step. It can additionally or alternatively include a heating step as a curing step. Those curing steps, especially UV curing steps, may make use of a mask such that at least a partial curing (partially curing in space or in time) of the optical encapsulating material 154 is achieved. This may be followed by another (optionally masked) curing step and/or a thermal curing step. During curing, the refractive index of the cured material is typically increased. This results in a structure with two different refractive indices, allowing the formation of optical coupling structures 152, such as wave guides, in this polymer encapsulation 153. For instance UV curing can be used in order to produce Self Written Wave-guides (SWW) in the encapsulation 153. SWWs are discussed further below. In order to provide good optical coupling, wave-guides may be formed through the encapsulation 153. These wave-guides may be formed using lithographic methods (e.g., making holes by means of etching or laser ablation and filling them with a material with different optical properties, as will be shown in and explained with respect to Fig. 23 and Fig. 24, or by making use of an SWW technique, as will be shown in Fig. 21 and Fig. 22 and the corresponding description. Self written wave-guide techniques are described by Manabu Kagami et al. in Appl. Phys. Lett. **79** (8) (2001) p1079 and Yariv and Kewitsh, Appl. Phys. Lett. **68** p455 (1996). Using such techniques, a wave-guide is formed by selectively illuminating a polymer material with UV light. If the refractive index of the polymer increases during the curing, a self-focusing effect can occur, and the spreading of the light is compensated for by this self-focusing effect.

In Fig. 21 and Fig. 22, some embodiments of the present invention are depicted.

Fig. 21 illustrates the method according to the present aspect of the invention. Fig. 21 part (a) is an illustration in cross-section of the providing of the external alignment structure 156 comprising the support means 158, e.g. support plate, comprising a hole 160, and an example of an alignment feature 162 and Fig. 21 part (b) shows the provision of an optical encapsulating material 154, which may cover an optoelectronic device 164. In passive optical devices for passive alignment of optical devices and optoelectronic devices, an optoelectronic device 164 may not be present. The material provided in the hole 160 then does not encapsulate an optoelectronic device 164, but still will be referred to as optical encapsulating material 154 and the corresponding cover extending onto the hole 160 will be referred to as encapsulation 153. In Fig. 21 part (c) a flat external interface of the optical encapsulating material 154 is obtained by applying a flattening layer 166, e.g. polymer layer or film, on its surface. The flattening layer 166, e.g. polymer layer or film, is in that stage part of the encapsulation 153. As discussed above, this can be e.g. obtained using a stamp technique. In Fig. 21 part (d), optical coupling structures 152 such as wave guides 168 may be provided in the optical encapsulating material 154, for example self written wave-guides may be formed using a mask, which is aligned to the alignment features or elements 162, such as e.g. alignment pins. The device 150 having an optical interface, e.g. the optoelectronic module as obtained by the above method may be used as such.

Alternatively, the optoelectronic module may be further changed, as shown in Fig. 22. Using the structure obtained in Fig. 21 part (d), the uncured flattening layer 166, e.g. polymer layer or film, can be removed and replaced by another layer 172, e.g. another polymer layer, as shown in Fig. 22 part (a), which then becomes part of the encapsulation 153. This can be done e.g. if layer 166 is very suitable for creating a flat interface on the encapsulant, but not useful as a sealing layer because of its specific properties. A glass layer for example is suitable for creating a flat encapsulant layer, but is not suitable for making optical elements, such as e.g. microlenses in it by means of excimer laser ablation. This other layer 172, e.g. polymer layer, may have different properties than the first flattening layer, especially optical properties and can then be cured again e.g. by optical or thermal curing. If optical curing is used, this may be performed using UV radiation. The wavelength of the UV radiation used typically is different from the wavelength of UV radiation used for providing optical coupling structures 152, such as writing SWW in the optical encapsulating material 154. The latter is shown in Fig. 22 part (b). This technique may e.g. be used in a module wherein in a first encapsulant flattened waveguides are formed, whereas in a second encapsulant, on top of the first encapsulation optical elements, such as e.g. micro lenses are formed in a suitable material, e.g. a polymer material. In order to flatten the waveguides in the first encapsulant, preferably a suitable flattening layer 166 may be temporarily applied, which flattening layer 166 is removed and replaced by the second encapsulant. The second encapsulant preferably should be thin or contain optical elements to enhance the optical coupling.

Alternatively, the first flattening layer 166 applied during the flattening step may be cured, e.g. by performing a thermal curing step or an optical curing step such as a UV curing step, at a wavelength different from the wavelength used for providing optical coupling structures 152, such as writing SWW in the optical encapsulating material 154, and the first flattening layer 166 may be removed, as it may limit the optical coupling. In selective areas, limited when compared to the total structure, curing may not be necessary, depending on the particular application. In other words, the encapsulant may be only partly cured. The rest is still liquid but contained within the package due to sealing layer 166.

In Fig. 23 to Fig. 26, different steps of other embodiments of the present invention are illustrated. The same steps 102, 104, 106 of the method 100 of the first aspect of the present invention are performed. This is illustrated by way of example in Fig. 23 in parts (a), (b) and (c), which are identical to the steps shown in Fig. 21 in parts (a), (b) and (c). Holes 180 may be provided in the encapsulation 153, i.e. the flattening layer 166 and the optical encapsulating material 154, e.g. by — the method not being limited thereto — ablation, as can be seen in Fig. 23 part (d). An exemplary ablation technique, the present invention not being limited to the use thereof, is discussed in detail in the description above. The holes 180 are then refilled to form vertical wave-guides 168 as can be seen in Fig. 23 part (e). Alternatively, the flattening layer 166 as obtained in step 106 and as can be seen in Fig. 23 part (c) may be first removed and holes 180 may be formed, e.g. by ablation, only in the optical encapsulating material as shown in Fig. 24 part (a). The holes 180, ablated in the optical encapsulating material 154 then are refilled to form vertical wave-guides 168 as can be seen in Fig. 24 part (b). Alternatively, the structure as can be seen in Fig. 23 part (c) also may be further processed by fabricating optical coupling structures 152 different from vertical wave-guides into the material, i.e. by fabricating further optical coupling structures 152 such as e.g. optical elements like microlenses 190 in the encapsulation 153, e.g. in the flattening layer 166, e.g. polymer film or layer, aligned to the alignment features 162, e.g. alignment pins. The latter is shown in Fig. 25. The optical elements, e.g. microlenses 190 may be produced e.g. by laser ablation, although the invention is not limited thereto. In another alternative, after the flattening step 106, the obtained structure as shown in Fig. 23 part (c) may be changed further by removing the flattening layer 166, e.g. polymer layer or film, and by fabricating optical coupling structures 152 different from wave-guides, such as e.g. optical elements like microlenses 190 directly in the optical encapsulating material 154, which is aligned to the alignment features 162, e.g. alignment pins. The latter is shown in Fig. 26. Removal of the flattening layer 166, e.g. polymer layer or film, as shown in Fig. 24 and Fig. 26 is typically effected when improved optical coupling from the external optical system, such as e.g. fibres, to the optical coupling structures 152 in the underlying material, e.g. polymer, such as for example, wave guides 168 or optical elements, e.g. microlenses 190 like e.g. laser ablated lenses, are desired. The flattening layer 166 can remain on the underlying optical encapsulating material 154, then together forming the encapsulation 153, when it is advantageous to fabricate optical coupling elements in this layer, such as optical elements, such as e.g. micro lenses 190, e.g. by means of laser ablation for instance, as shown in Fig. 23 and Fig. 25. The technique of laser ablation of optical coupling structures is discussed in detail in the description above.

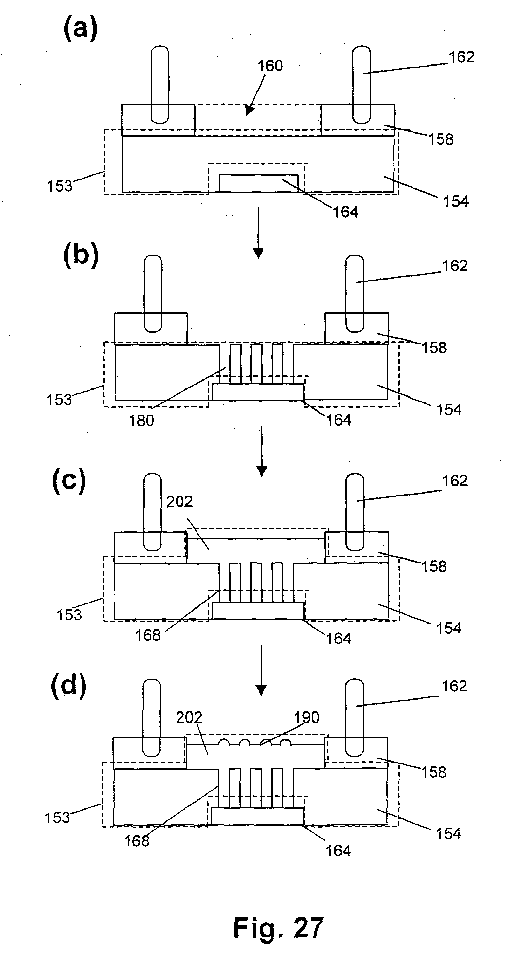

In Fig. 27, another embodiment according to the present invention is described. In a first flat optical surface produced by steps 102, 104 and 106 of method 100, a structure is obtained as shown in Fig. 27 part (a), whereby the flattening layer 166, e.g. polymer layer or film, as shown in Fig. 21 part (c) has been removed. Then holes 180 are being created using appropriate techniques, such as etching techniques or ablation. The resulting structure is shown in Fig. 27 part (b). The holes 180 may then be filled with a second encapsulating material 202, second encapsulating material 202 thus being part of the encapsulation 153, which forms a new layer on top of the first flat surface, which is or can be made flat according to methods as disclosed in the present invention. Optical coupling elements, such as optical elements like e.g. lenses 190, may then be formed, e.g. by ablation, in the layer of second encapsulating material 202 and aligned above vertical wave-guides 168, which had been created when filling the holes with the second encapsulating material 202.

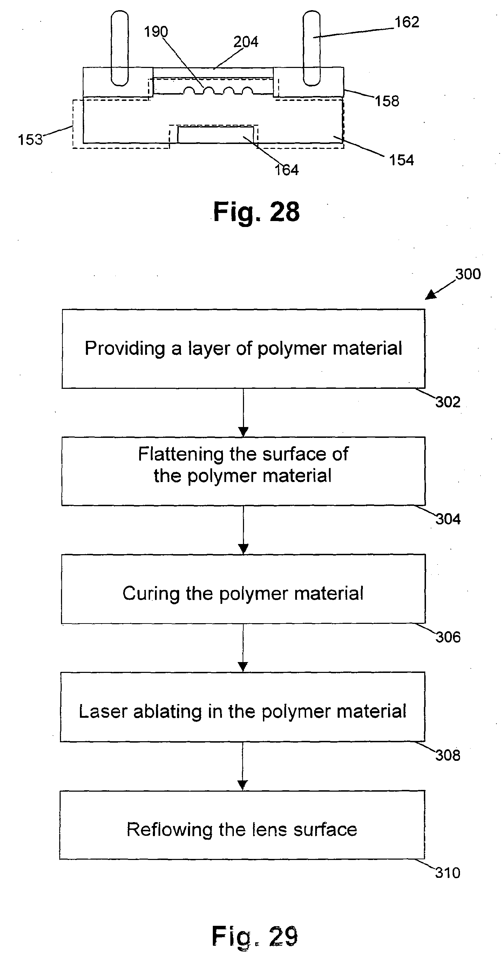

In embodiments where optical elements, e.g. lenses 190 are provided on the external surface of the encapsulation 153, a cover plate 204 may be added above such optical elements, e.g. lenses 190, as shown in Fig. 28

In the different embodiments comprising wave-guides 168, the wave-guides 168 may furthermore be ordered in an array configuration, as depicted in Fig. 21, Fig. 22, Fig. 23, Fig. 24 and Fig. 27. This array can form a regular rectangular lattice or a hexagonal lattice or can have any other lattice configuration. The wave-guides may, as well, be randomly chosen, depending on the particular application.

In embodiments wherein the support means 158, e.g. support plate, is placed in a device comprising an optoelectronic component 164, providing an encapsulation 153 by filling through the hole 160 bridges the gap between the optical interface to be obtained and the optoelectronic component 164 present. The optical coupling structures 152 such as the wave-guides 168 may then abut onto the optical ports of the optoelectronic component 164.

In the embodiments discussed above, the hole 160 in the support means 158, e.g. plate, may furthermore include an optical component. In other words, an optical component may be present in the hole 160 in the support means 158.

In a second aspect, a method is provided for producing optical elements, such as e.g. micro lenses or specific surface shapes such as mirrors in suitable material, i.e. in material suitable for laser ablation. The different steps of the method 300 are shown in a schematic flow chart diagram of Fig. 29. In a first step 302, a layer of suitable material is provided, such as e.g. polymer material, glass or glass-like material, quartz, metals or certain ceramics. Polymer material is particularly suitable, and therefore the second aspect of the present invention is described with respect to the suitable material being polymer material, although it is not intended to limit the invention thereto. This layer may e.g. be provided in a hole in a support means, e.g. a support plate, which may be part of a packaging of an optoelectronic module, although the invention is not limited thereto. In a second step 304, the surface of the material suitable for laser ablation, such as e.g. polymer material is flattened. This step typically is optional, depending on the quality and flatness of the material provided in the previous step. Flattening techniques are well known and a technique according to an embodiment of the first aspect of the invention is described in more detail in the above-described aspect of the invention. In a further step 306, the material suitable for laser ablation, such as e.g. polymer material is cured. This step also may be optional, depending on the material suitable for laser ablation used. This step is typically applied for polymer materials. In step 308, laser ablating in the material suitable for laser ablation, such as e.g. polymer material is performed, such that optical elements, e.g. micro lenses or mirrors, are formed at controlled locations in the surface by using the alignment feature of the external alignment structure. In an optional step 310, if the surface quality of the optical element, e.g. lens, surfaces is insufficient and/or is to be improved, reflowing of the optical element, e.g. lens, surfaces is performed.

Providing a suitable material, such as e.g. a polymer layer , a glass or glass-like material, quarts, metals or a number of ceramics, may comprise providing any material suitable for controlled material removal by means of pulsed laser ablation. Polymer material is especially useful for laser ablation applications. In case of excimer laser ablation, polycarbonate has a superior surface finish after ablation. Polyimide, polystyrene, benzo-cyclo-buthene (BCB), Cyclic Olefin Copolymers, polymethyl methacrylate and other acrylates are other examples of polymers that are suitable for ablation of optical elements, e.g. lenses. Some examples of suitable excimer lasers for performing the ablation may be e.g. fluorine lasers having a dominant wavelength of 157 nm, argon-fluoride lasers emitting at 193 nm, krypton-fluoride lasers emitting at 248 nm, a quadrupled YAG laser emitting at 266 nm or any other laser emitting laser pulses in the UV wavelength. At these UV wavelengths, polymers usually show a very high absorption, which is desirable for ablation.

In certain embodiments the optical elements, such as e.g. micro lenses may be ablated into the material suitable for ablation such as e.g. a polymer by using a contour scanning technique. In the following, a more detailed description of laser ablation according to a contour scanning technique is given. This technique is a rapid prototyping method for refractive microoptics with arbitrary surface profile. Optical elements, such as e.g. spherical lenses with a broad range of f-numbers have been fabricated and wave front aberrations well below $\lambda/10$ are reported for slow lenses. It is experimentally verified that the best results in terms of aberrations are obtained for low etch rates, i.e. low laser fluences. These aberrations showed to be, at the same laser fluence, independent of the pulse rate and contour velocity. The contour writing sequence is of little importance for high f-numbers. For fast lenses, ablating the lens from the rim towards the centre yields the lowest lens aberrations. The fabrication method shows some obvious benefits compared to other fabrication techniques: the direct-write and contactless nature of the ablation process; the possibility to define microstructures and microoptics on a top surface of a heterogeneous optoelectronic module in a very late phase of the assembly process; the flexibility in terms of surface shapes, diameter and focal length; the simplicity of the set-up; the possibility to fabricate arrays of identical lenses at the same time. These advantages make scanning contour ablation an attractive microoptics fabrication technique at prototyping level and for modest volume production. More details of the fabrication technique can be found in the above part of the description, as well as in "Direct Writing of Micro lenses in Polycarbonate with Excimer Laser Ablation" by K. Naessens in Applied Optics **42** (31) (2003) p6349-6359.

In one embodiment, a circular laser beam is used for making optical elements, e.g. lenses, with a spherical footprint. This beam makes circular contour movements during firing of the laser, resulting in a sequence of holes, each having the lateral dimensions of beam. Optical elements, such as e.g. lenses, even with non-circular footprints, can also be realised with other beam and/or contour shapes. For example: elliptical footprints can be realised with an elliptical beam spot and scanning along elliptical contours. The beam fluence for ablation of optical elements, such as e.g. lenses, typically involves 50-500 mj/cm$^2$ in order to obtain a good lens surface, but should not be limited to this range. Optical elements, e.g. microlenses, are preferably put in a regular rectangular or hexagonal or any other lattice structure, depending on the application. The said laser ablation technique is capable of making full arrays in one go using multiple beams and in essentially the same time as for a single optical element, e.g. lens, with a single beam. The multiple beams can be realised by using a beam mask consisting of an array of holes.

Optionally, in step 310, the optical element, e.g. lens, surface area may be smoothened to optical quality by surface reflow. The latter depends typically on the quality of the optical element, e.g. lens, surface area after ablation and on the requirements for the optical element, e.g. lens, surface area. The ablated optical element area, e.g. lens area, might show some irregularities and surface roughness due to overlapping of ablated holes, which is the result of the discrete ablation process. Reflow can be obtained by locally or entirely heating of the layer. In a specific example, the entire optical element, e.g. lens, surface or optical element, e.g. lens, array surface can be exposed to additional laser pulses. Each pulse removes a thin layer of material while heating a thin layer below the ablated crater, thus gradually smoothing out the surface. Depending on the fluence, a train of 100 pulses will be sufficient to obtain optical quality, driving the optical elements, e.g. lenses, some 5 microns deeper.

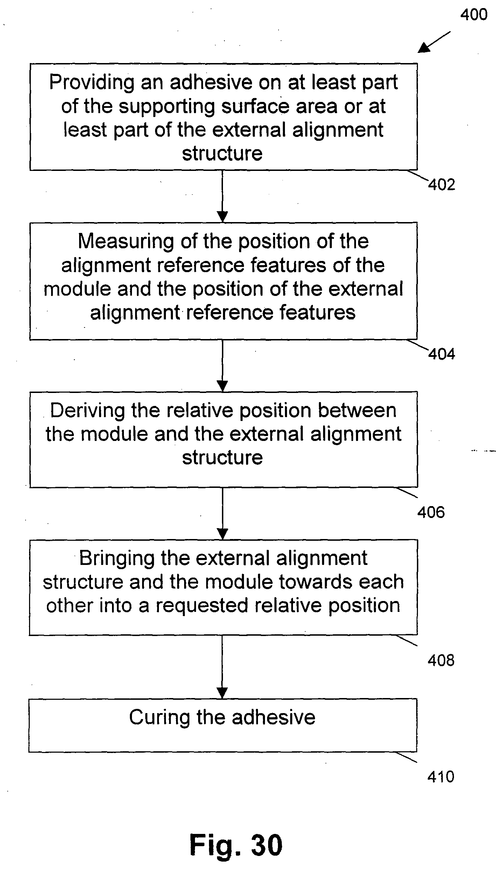

In a third aspect, the present invention relates to a method for controlled positioning and bonding of an external alignment structure on a module and devices fabricated accordingly. This method can e.g. be applied to mount an external alignment structure on a supporting structure surrounding an optoelectronic component. The module includes a supporting structure comprising a supporting surface area and module alignment reference features. The external alignment structure comprises a support means, such as e.g. a support plate, and alignment reference features, i.e. features for aligning the support means. The method for controlled positioning and bonding is schematically described in the flow chart diagram of Fig. 30, indicating the different steps of the method 400. A first step 402 comprises providing an adhesive on at least part of the supporting surface area or on at least part of the alignment reference features. The adhesive may be UV curable or thermal curable acrylates, such as e.g. Norland Adhesives (types 61, 65, 72, 83H) Delo-Photobond 4302, Dymax OP-65-LS, Ablestik (types A4083, A4031 and A4039), Ormocer, UV or thermal curable epoxies and silicones, two-component adhesives, etc. In a second step 404, the position of the alignment reference features of the module and the alignment reference features of the external alignment structure are determined. The sequence for determining both positions may be altered without leaving the scope of the method and determining the positions may even be performed in parallel. Furthermore it will be obvious that both positions may be determined in absolute values, but that it is also possible to determine a first position in absolute values and a second position relative to said first position. From the determined positions, the relative position between the module and the device is derived in step 406. A comparison with the requested relative position, which is provided, allows, in step 408, to bring the device and the module towards each other into the requested relative position (x,y,z). When the device and the module are in the requested relative position, the adhesive is cured, according to step 410.

The presence of the adhesive allows flexibility in a particular direction, here the vertical or z-direction, which is an advantage in optical interconnect systems according to the present invention. The vertical or z-distance between the external alignment structure and the supporting structure can still be varied before the adhesive is cured; hereby object and image distances of optical systems which need to be integrated in further steps can still be tuned. This can easily be done for a vertical distance up to 500 $\mu$m, as for instance 100 $\mu$m or 200 $\mu$m or 300 $\mu$m or 400 $\mu$m. Preferably the standard deviation on the thickness of the applied adhesive layer is smaller than 50 $\mu$m. The thickness of adhesive layer after the dispensing typically is in the order of 250 $\mu$m to 500 $\mu$m, depending on the expected gap between spacer plate 158 and interposer 604/614. After alignment and curing, thickness is determined by the gap between the spacer plate and the interposer.

This alignment procedure differs from the traditional vision-based alignment techniques in the sense that in traditional systems, both objects are captured instantaneously by the same vision system. For example, the alignment features of both objects need to be on the same video screen, so that the operator or the software can align both objects. This is not needed in embodiments according to the present invention, where the measurement of the position of both objects is decoupled. The measurement of the position itself can be based on a vision system.

In other words, in the present method, the coordinates (x,y,z) of alignment features on both the reference component and the second component are determined. Next the second component is moved towards the desired location, which requires a relative translation entirely determined by the measured coordinates. It is an advantage of the present method that the two components do not need to be aligned through direct aligning of features on both components, i.e. by aligning both components, as the latter is difficult because the alignment features of both components usually are not in the same focus plane of the camera. It furthermore is an advantage of the method of the present invention that accurate alignment in a third dimension, e.g. perpendicular to the image plane of the camera, can be performed, thus improving the accuracy. The method according to the present invention therefore does not need to rely on the dimensional accuracy of the second component, or in other words, accurate alignment can be performed substantially independent of the dimensional accuracy of the second component. The latter furthermore reduces the economical and physical effort needed for obtaining an acceptable dimensional accuracy of these components for optical interconnect applications. In other words the present method is based on the use of a single camera and a coordinate measurement machine, which allows to align objects in 3D with almost no restrictions on the shape and position of the alignment features on the objects. In contrast to the prior systems, the alignment features do not have to be closely together so that they fit in field of view of vision system, or the distance between the features does not have to be sufficiently large so that 2 vision systems can be used, each of them looking to one feature. Furthermore, the objects should not be transparent, i.e. can be opaque, whereas in prior art systems, the objects need to be transparent, so that two features are visible at same time, etc.

The alignment procedure is based on a combination of a co-ordinate measurement machine (CMM), a module mounting chuck, an external alignment structure grip, and a controlled alignment stage (CAS). The module mounting chuck is fixed to the CMM, thus having fixed co-ordinates with respect to the co-ordinate measurement machine. The external alignment structure grip is attached to the CAS. The CAS is coupled to the CMM, and the movements of the CAS are calibrated by the CMM. The CAS may be mounted on the CMM. This set-up allows measuring the co-ordinates of the module, to measure the co-ordinates of the external alignment structure, and to move the external alignment structure to the desired position relative to the module. Then the position of the external alignment structure is fixed using a standard method, for example by using a UV curable adhesive.

In certain embodiments the method is such that the module comprises an optical component, the external alignment structure comprises an optical interface comprising optical coupling structures and the requested relative position is such that the optical coupling structures are aligned with the optical component. Illustrations of devices that can be made using the present method are described in more detail in the fourth aspect.

In a fourth aspect, the invention relates to optical devices such as e.g. parallel optical interconnect modules or optical devices for passive alignment of optical elements and optoelectronic components, that can be fabricated with any of or a combination of the methods as described in the first three aspects and a method for fabricating these devices. The methods for fabricating these devices, disclosed herein, comprise a technique of mounting an external alignment structure on the module, and comprises a technique of fabrication of the optical coupling structures, needed for providing a good optical interface, directly in the encapsulation, with desired position in the optoelectronic module. The invention therefore also comprises a method for combining two or more of the different methods described in the first, second and third aspect of the present invention. In this way passive alignment of optical elements, such as e.g. fibres, optical coupling structures, such as lenses, mirrors and wave-guides to assist coupling and optoelectronic components can be obtained. The method thus provides a technique to fabricate parallel optical interconnect modules.

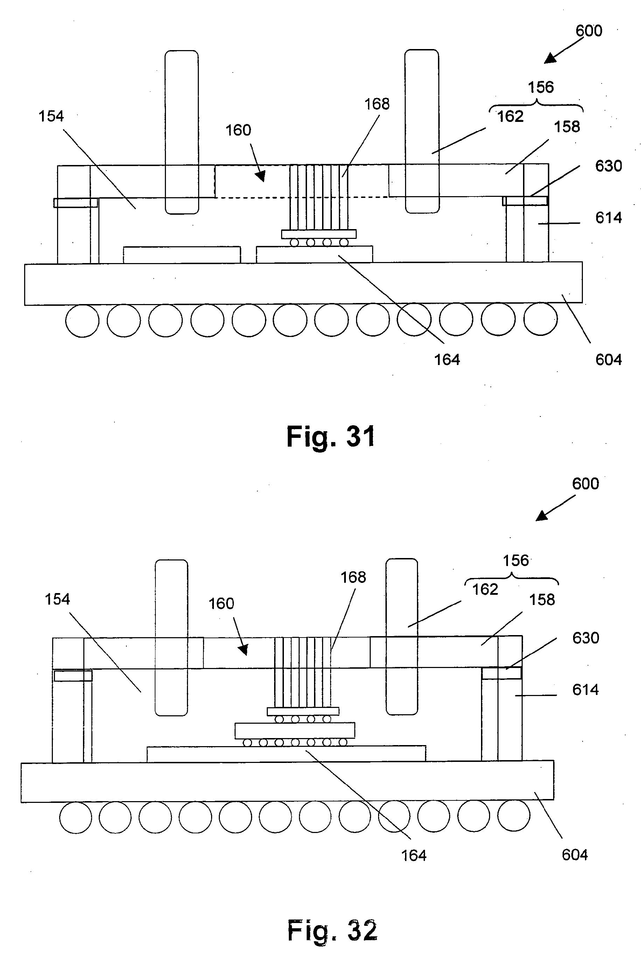

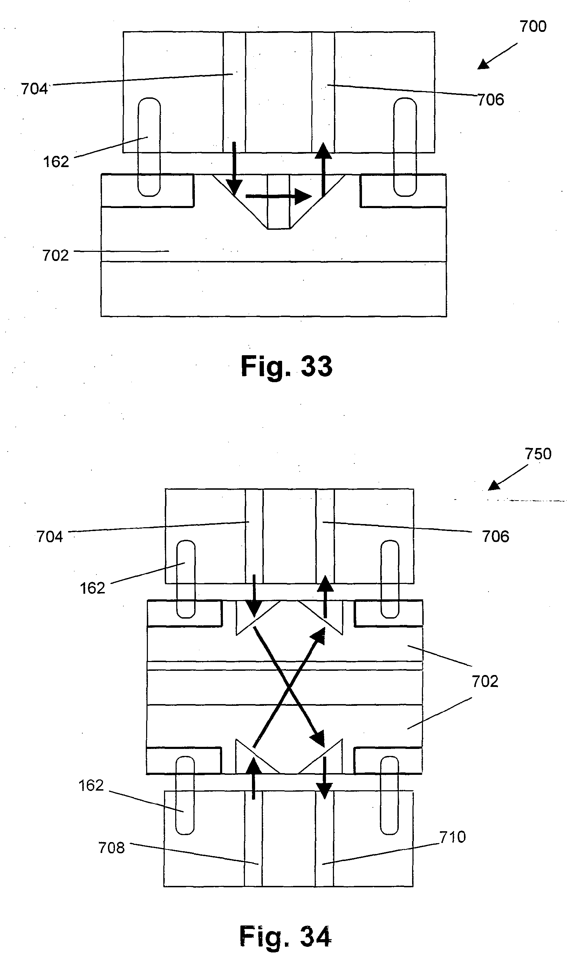

The optical modules 600, 700, 750 according to the fourth aspect of the present invention, may comprise optoelectronic components, as shown in Fig. 31 and Fig. 32, but they also may have no active optoelectronic components, as shown in Fig. 33 and Fig. 34, in other words, there is no need of having active optoelectronic components. The optical modules 600 as shown in Fig. 31 and Fig. 32, typically comprise one or more optoelectronic components 164, an interposer 604, providing an interface between different components such as e.g. chips for driving said optoelectronic components 164, the at least one optoelectronic component 164 and a printed circuit board (not shown), a surrounding supporting structure 614, which is surrounding the at least one optoelectronic component 164 in-plane. The optical modules 600 furthermore comprise an external alignment structure 156, based on a support means 158, which may be a support 158, the support means 158 comprising at least one hole 160 and comprising external alignment features 162 such as e.g. alignment pins. The optical module 600 also comprises a layer of cured adhesive 630 between the support means 158, e.g. the support plate, and the surrounding supporting structure 614. The interposer 604, the surrounding supporting structure 614, the cured adhesive 630 and the external alignment structure 156 together form a cavity, which may be a closed cavity, which is closed except for the at least one hole 160 in the support means 158, e.g. support plate, of the external alignment structure 156. The cavity thus comprises the at least one optoelectronic component 164. Inside the cavity, an encapsulation 153 is provided which comprises at least an optical encapsulating material 154, which extends from at least one of said at least one optoelectronic component 164 into the hole 160 in the support means 158. The encapsulation 153 has either a flat external surface in said hole 160 or comprises optical coupling elements, such as e.g. micro lenses or mirrors, at its external surface. In order to obtain a flat external surface for the encapsulation 153, the optical encapsulating material 154 may be flattened, as described in more detail in the first aspect of the present invention. During this flattening, a covering layer, which typically is a polymer layer may be applied to the optical encapsulating material 154, which thus becomes part of the encapsulation 153. Other layers, typically polymer layers, also may be applied to the optical encapsulating material 154, thus also becoming part of the encapsulation 153. With encapsulation 153, thus not only the optical encapsulating material 154 but also possible additional layers may be referred to. The interposer 604, surrounding supporting structure 614 and external alignment structure 156 can be different parts components or can be integrated into fewer parts or components, e.g. 2 or 1 single component, together having the relevant corresponding functionality. An advantage of using the method according to the third aspect for aligning the external alignment structure 156 and the remaining parts is that the angle between the external alignment structure 156 and the underlying supporting structure can be well controlled en can be different from 0, which can be interesting for certain types of external optical systems, for instance in the field of sensor packaging. One advantage of this technique is that no module-specific high-precision mechanical parts, which typically are expensive, are employed to fabricate the module. Another advantage of this aspect is that the external surface of the external alignment structure can be put parallel with a high degree of precision. The precision depends on the quality of the co-ordinate-measuring machine and the size of the object. An exemplary optical encapsulating material 154 is a polymer with high glass temperature that is compatible with electronic manufacturing techniques such as solder reflow. This polymer optical encapsulating material 154 can be a thermoplast or thermoset. It can be UV curable, resulting in lower stress during and after curing, or thermally curable, suitable for thicker layers. The polymer should be optically clear, and suitable for fabrication of wave-guides in the encapsulation 153. It can be a UV curable polymer, such as acrylates, allowing for roomtemperature fabrication without diminishing the properties of the underlying module. In certain embodiments the encapsulation 153, i.e. the optical encapsulating material and/or polymer layers provided on top of the encapsulating material during flattening or for other purposes, comprises optical coupling structures such as wave-guides 168 or micro lenses 190 or mirrors. These can be positioned perpendicularly to the surface of the interposer 604, i.e. their optical axis can be perpendicular to the interposer 604. In certain embodiments, these optical wave-guides 168 are self written wave guides. The wave-guides 168 may have an inclination (not shown in Fig. 31 and Fig. 32) with respect to the surface of the interposer 604. These optical wave-guides 168 may be coupled to the optical ports of optical components. In other embodiments the optical coupling structures are formed by a flat (with respect to topology, not with respect to orientation) surface of the encapsulation 153.

In Fig. 33 and Fig. 34, passive optical devices 700, 750 are shown, which can be made using the techniques described in the first, second or third aspect of the present invention. In these passive optical devices 700, 750 at least one external alignment structure, for example an alignment pin, is mounted on a passive structure. Optical coupling structures are provided to define an optical function for the passive optical components 700, 750. Such an optical function may be e.g. providing a coupling between different optical fibre arrays, providing a reflection portion at an end of an optical fibre array, etc.

In a first example, as shown in Fig. 33, a passive optical component 700 is disclosed, whereby optical coupling structures are provided in the form of flat surfaces or other topologies, e.g. made by laser ablation into a material 702 corresponding to the encapsulation 153, but which is not necessarily encapsulating an optoelectronic component, such that mirrors are formed which can guide and/or reflect some incoming light from a first fibre 704 in certain directions as for instance back into another outgoing fibre 706. By way of example, a possible light way for the light is illustrated by the arrows in Fig. 33.

In a second example, a passive optical component 750 is shown whereby two external alignment structures 162, e.g. alignment pins, are mounted on a passive structure, and optical coupling structures are defined in between the external reference structures, to define an optical function from one side to the other side. In this way, e.g. improved coupling between fibre arrays with different fibre properties can be obtained. Such an embodiment is depicted in Fig. 34. In this embodiment, laser ablated structures, as for instance mirrors, to guide the incoming light into outgoing fibres, are introduced. For instance a left-right switch or any other permutation of signal-carrying fibres can be achieved for 2 or more fibres. It is to be noted that the two devices shown in Fig. 33 and Fig. 34 are only exemplary, and that the invention is not limited to these devices, but also refers to other types of passive optical structures, i.e. optical structures without optoelectronic components having features as set out in the claims. Typically the passive optical structures are adjusted to be used with optical connectors such as for example MT-RJ connectors, well known for a person skilled in the art.

Other arrangements for accomplishing the objectives of the methods for providing an optical interface in the packaging of optical modules and the devices obtained using these methods and embodying the invention will be obvious for those skilled in the art. It is to be understood that although preferred embodiments, specific constructions and configurations, as well as materials, have been discussed herein for devices according to the present invention, various changes or modifications in form and detail may be made without departing from the scope of the claims.

**Claims**

1. A method for providing an optical interface comprising at least one optical coupling structure (152, 168, 190), the method comprising

- providing an external alignment structure (156), comprising a support means (158) with at least one hole (160) and at least one alignment feature (162),
- after providing said at least one hole (160), providing an encapsulation (153) comprising at least optical encapsulating material (154) into said at least one hole (160), and
- after providing the encapsulation, forming at least one optical coupling structure (152, 168, 190) in said encapsulation (153), said forming being at a well-defined position relative to said at least one alignment feature (162) of said external alignment structure (156).

2. A method according to claim 1, wherein forming said at least one optical coupling structure (152, 168, 190) in said encapsulation (153) comprises direct writing at least one optical coupling structure (152, 168, 190) into said encapsulation (153).

3. A method according to any of claims 1 and 2, said method furthermore comprising, prior to forming said at least one optical coupling structure (152, 168, 190) into said encapsulation (153), flattening an external surface of said optical encapsulating material (154), thereby creating an optically substantially flat external surface of said encapsulation (153).

4. A method according to claim 3, wherein said external surface of the encapsulation (153) is aligned with an external surface of said support means (158).

5. A method according to claim 3, wherein said external surface of the encapsulation (153) is outside a plane determined by the external surface of the support means (158).

6. A method according to any of claims 3 to 5, wherein said at least one optical coupling structure (152) comprises micro lenses (190), formed on an external surface of said encapsulation (153).

7. A method according to any of claims 3 to 6, wherein flattening the external surface of said optical encapsulating material (154) comprises

- providing a flattening layer (166) on the external surface of said optical encapsulating material (154), and
- curing of the optical encapsulating material (154) underneath the flattening layer (166).

8. A method according to any of claims 3 to 6, wherein flattening the external surface of said optical encapsulating material (154) comprises

- providing a flattening layer (166) on a stamp,
- pressing said flattening layer (166) on the external surface of the optical encapsulating material (154) by means of said stamp,
- curing said optical encapsulating material (154) underneath said flattening layer (166), and
- removing said stamp

9. A method according to claim 8, wherein the step of removing the stamp also removes the flattening layer (166).

10. A method according to claim 8, wherein the step of removing the stamp leaves the flattening layer (166) attached to the cured optical encapsulating material (154), as part of the encapsulation (153).

11. A method according to any of claims 7 to 10, wherein said flattening comprises at least one radiation curing step.

12. A method according to claim 11, wherein a mask is used to pattern said at least one radiation curing step.

13. A method according to any claim 11 in as far as dependent on any of claims 8 to 10, wherein said stamp is such that it forms said mask.

14. A method according to any of the previous claims, wherein said optical coupling structures (152) are wave-guides (168) formed through said encapsulation (153).

15. A method according to claim 14, wherein said wave-guides (168) are ordered into an array configuration.

**16.** A method according to any of claim 1 to 15, wherein said hole (160) comprises an optical element.

**17.** A method according to any of claims 1 to 16, wherein said support means (158) comprises alignment features (162) on both sides of said hole (160).

**18.** A method according to any of claims 1 to 17, wherein said providing of an external alignment structure (156) comprises,

positioning an external alignment feature (162) on a support means (158) of a device comprising at least one optoelectronic component (164),

wherein providing an encapsulation (153) bridges a gap between the optical interface to be provided and the at least one optoelectronic component (164) on said device.

**19.** A method according to any of claims 1 to 18, wherein forming at least one optical coupling structure (152, 168, 190) comprises ablating at least one optical coupling structure (152, 168, 190) in said encapsulation (153).

**20.** An optical module, the optical module comprising a cavity, an external alignment structure (156) based on a support means (158), comprising at least one hole (160) providing an entrance to said cavity and comprising at least one alignment feature (162) extending outwards from a surface of the support means (158), said optical module furthermore comprising an encapsulation (153) comprising at least optical encapsulating material (154) inside said cavity, said encapsulation (153) extending into said at least one hole (160), **characterised in that** said encapsulation (153) comprises at least one optical coupling structure (152, 168, 190) directly written and aligned with said at least one external alignment feature (162).

**21.** An optical module according to claim 20, wherein said at least one optical coupling structure (152, 168, 190) is a flat external surface or at least one micro lens (190) directly written in an external surface of said encapsulation (153).

**22.** An optical module according to any of claims 20 to 21, wherein said module furthermore comprises

- at least one optoelectronic component (164) provided in said cavity,
- an interposer (604) providing an interface between at least said at least one optoelectronic component and a printed circuit board,
- a surrounding support structure (614), which is surrounding said at least one optoelectronic component (164),
- a cured adhesive (630) in between said external alignment structure (156) and said surrounding support structure (614),

wherein said interposer (604), said surrounding support structure (614), said cured adhesive (630) and said external alignment structure (156) form said cavity, said cavity being closed except for said at least one hole (160) and wherein said optical encapsulating material (154) extends onto said at least one optoelectronic component (164).

**23.** An optical module according to any of claims 20 to 22, wherein said optical encapsulating material (154) is a curable polymer.

**24.** An optical module according to any of claims 20 to 23 wherein said at least one optical coupling structure (152) in said encapsulation (153) comprises optical wave-guides (168).

**25.** An optical module according to claim 24, wherein said optical wave-guides (168) are positioned perpendicularly on the surface of said interposer (604).

**26.** An optical module according to any of claims 24 to 25, wherein said optical wave-guides (168) are self written wave guides.

**27.** An optical module according to any of claims 24 to 26, wherein said optical wave-guides (168) are holes (180) in the encapsulation (153) filled with a filing material different from said optical encapsulating material (154).

**28.** An optical module according to any of claims 20 to 27, wherein said at least one optical coupling structure (152) in said encapsulation (153) comprises at least one micro lens (190) fabricated by means of laser ablation.

**29.** An optical module according to any of claims 24 to 27, wherein said optical wave-guides (168) are coupled to optical ports of an optical component.

30. A method for controlled positioning and bonding of an external alignment structure on a module, said module comprising a supporting means with a supporting surface area and comprising module alignment reference features, said external alignment structure comprising external alignment structure reference features, the method comprising

- providing an adhesive on the external alignment structure or on the module at at least part of the supporting surface area or at at least part of the external alignment structure reference features
- measuring the position of the alignment reference features of the module and the position of the external alignment reference features,
- deriving the relative position between said module and said external alignment structure,
- bringing the external alignment structure and the module towards each other into a requested relative position, and
- curing said adhesive.

31. A method according to claim 30, wherein said module comprises an optical component, the supporting means comprises an optical interface comprising optical coupling structures and the requested relative position is such that the optical coupling structures are aligned with said optical component.

**Fig. 1**

**Fig. 2a**

**Fig. 2b**

**Fig. 3a**

**Fig. 3b**

**Fig. 4**

Cone with apex angle of 160 deg

x [µm]     y [µm]

## Fig. 5a

radial coordinate [µm]

— measure
∘ 9.5 degrees

## Fig. 5b

**Fig. 6**

**Fig. 7**

**Fig. 8**

**Fig. 9a**

**Fig. 9b**

**Fig. 10a**

**Fig. 10b**

**Fig. 11a**

**Fig. 11b**          **Fig. 11c**

**(a)**

**b)**

**Fig. 12**

**Fig. 13**

Fig. 14

Fig. 15

**RMS [lambda]** — 0.4, 0.3, 0.2, 0.1, 0

decremental    incremental    random

lenses 1-2
lenses 3-11

# Fig. 16a

Mean -0,0000
RMS 0,5477
P-V 2,5579
Max 1,6271
Min -0,9308

Dev. from ideal / lambda

y / Millimeter

x / Millimeter

# Fig. 16b

Fig. 17

Fig. 18

100

| Providing external alignment structure based on a support plate comprising at least one hole |

102

| Providing an optical encapsulant material into the hole |

104

| Flattening the external interface or optical encapsulant material |

106

| Producing an optical coupling structure into the optical encapsulant |

108

**Fig. 19**

Fig. 20

**(a)**

160

162

156

158

164

**(b)**

162

158

153

164

154

**(c)**

162

166

158

153

164

154

**(d)**

162

150

166 168

158

153

164

154

**Fig. 21**

**Fig. 22**

**Fig. 23**

**(c)**

**(d)**

**(e)**

# Fig. 23 continued

(a)

166    180    162

158

153

164    154

(b)

166    168    162

158

153

164    154

**Fig. 24**

166    190    162

158

153

164    154

**Fig. 25**

190    162

158

153

164    154

**Fig. 26**

**(a)**

160
162
158
153
164
154

**(b)**

162
158
153
180
164
154

**(c)**

202
162
158
153
168
164
154

**(d)**

202    190
162
158
153
168
164
154

# Fig. 27

Fig. 28

Fig. 29

Providing a layer of polymer material

Flattening the surface of
the polymer material

Curing the polymer material

Laser ablating in the polymer material

Reflowing the lens surface

400

Providing an adhesive on at least part
of the supporting surface area or at
least part of the external alignment
structure

402

Measuring of the position of the
alignment reference features of the
module and the position of the external
alignment reference features

404

Deriving the relative position between
the module and the external alignment
structure

406

Bringing the external alignment
structure and the module towards each
other into a requested relative position

408

Curing the adhesive

410

**Fig. 30**

**Fig. 31**

**Fig. 32**

**Fig. 33**

**Fig. 34**